(19) Europäisches Patentamt / European Patent Office / Office européen des brevets

(11) **EP 3 671 626 A1**

(12) **EUROPEAN PATENT APPLICATION**

(43) Date of publication:
**24.06.2020 Bulletin 2020/26**

(51) Int Cl.:
*G06T 5/00* *(2006.01)*     *H04N 5/232* *(2006.01)*
*H04N 19/186* *(2014.01)*

(21) Application number: **18213909.7**

(22) Date of filing: **19.12.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Thomson Licensing**
**35576 Cesson Sévigné Cédex (FR)**

(72) Inventors:
• ANDRIVON, Pierre
  35576 CESSON-SEVIGNE (FR)
• TOUZE, David
  35576 CESSON-SEVIGNE (FR)
• SERRE, Catherine
  35576 CESSON-SEVIGNE (FR)

(74) Representative: **Vidon Brevets & Stratégie**
**16B, rue de Jouanet**
**BP 90333**
**35703 Rennes Cedex 7 (FR)**

(54) **METHOD AND DEVICE FOR DETERMINING CONTROL PARAMETERS FOR MAPPING AN INPUT IMAGE WITH A HIGH DYNAMIC RANGE TO AN OUTPUT IMAGE WITH A LOWER DYNAMIC RANGE**

(57) According to at least one embodiment, there is provided a method for determining control parameters for mapping an input image ($I_{LMax}$) of a content, said image comprising pixels having luminance values represented with a high dynamic range bounded by a maximum luminance value ($L_{Max}$) to an image of the same content, said image comprising pixels having luminance values represented with a lower dynamic range, said method comprising :
- the computation (71) of an image characteristic parameter ($IC_{LMax}$) of the input image;
- the determination (74) of said control parameters ($CP_{LMax}$):
◦ from said image characteristic ($IC_{LMax}$), if said input image has a maximum luminance value ($L_{Max}$) less or equal than a maximum reference luminance value ($L_{Ref}$);
◦ otherwise, from a converted image characteristic ($cIC_{LMax}$), said converted image characteristic being configured to set at least one of said control parameters of at the value that the determination step would have determined for a reference image ($I_{LRef}$) of the same content, said reference image having intensities represented with a high dynamic range bounded by said maximum reference luminance ($L_{Ref}$).

Fig. 7

**Description**

**1. Field**

At least one embodiment relates generally to a processing an video or image. More particularly, at least one embodiment relates to a processing for determining control parameters for mapping an input image with a high dynamic range to an output image with a lower dynamic range.

**2. Background**

The present section is intended to introduce the reader to various aspects of art, which may be related to various aspects of at least one embodiment that is described and/or claimed below. This discussion is believed to be helpful in providing the reader with background information to facilitate a better understanding of the various aspects of at least one embodiment.

The advent of the High Efficiency Video Coding (HEVC) standard (ITU-T H.265 Telecommunication standardization sector of ITU (02/2018), series H: audiovisual and multimedia systems, infrastructure of audiovisual services - coding of moving video, High efficiency video coding, Recommendation ITU-T H.265) enables the deployment of new video services with enhanced viewing experience, such as Ultra HD services. In addition to an increased spatial resolution, Ultra HD format can bring a wider color gamut (WCG) and a higher dynamic range (HDR) than respectively the Standard Color Gamut (SCG) and the Standard Dynamic Range (SDR) of High Definition format currently deployed. Different solutions for the representation and coding of HDR/WCG video have been proposed such as the perceptual transfer function Perceptual Quantizer (PQ) (SMPTE ST 2084, "High Dynamic Range Electro-Optical Transfer Function of Mastering Reference Displays, or Diaz, R., Blinstein, S. and Qu, S. "Integrating HEVC Video Compression with a High Dynamic Range Video Pipeline", SMPTE Motion Imaging Journal, Vol. 125, Issue 1. Feb, 2016, pp 14-21). Typically, SMPTE ST 2084 allows representing HDR video signal of up to 10 000 cd/m$^2$ peak luminance with only 10 or 12 bits.

SDR backward compatibility with a decoding and rendering apparatus is an important feature in some video distribution systems, such as broadcasting or multicasting systems. A solution based on a single-layer coding/decoding process may be backward compatible, for example SDR compatible, and may leverage legacy distribution networks and services already in place.

Such a single-layer based distribution solution enables both high quality HDR rendering on HDR-enabled Consumer Electronic (CE) devices, while also offering high quality SDR rendering on SDR-enabled CE devices. Such a solution is based on an encoded signal, for example SDR signal, and associated metadata (typically only using a few bytes per video frame or scene) that can be used to reconstruct another signal, for example either SDR or HDR signal, from a decoded signal.

An example of a single-layer based distribution solution may be found in the ETSI technical specification TS 103 433-1 V1.2.1 (August 2017). Such a single-layer based distribution solution is denoted SL-HDR1 in the following.

Additionally, HDR distribution systems (workflows, but also decoding and rendering apparatus) may already be deployed. Indeed, there are a number of global video services providers which include HDR content. However, distributed HDR material may be represented in a format or with characteristics which do not match consumer end-device characteristics. Usually, the consumer end-device adapts the decoded material to its own characteristics. However, the versatility of technologies employed in the HDR TV begets important differences in terms of rendition because of the differences between the consumer end-device characteristics compared to the mastering display used in the production environment to grade the original content. For a content producer, artistic intent fidelity and its rendition to the consumer are of the utmost importance. Thus, "display adaptation" metadata can be generated either at the production stage during the grading process, or under the control of a quality check operator before emission. The metadata enable the conveyance of the artistic intent to the consumer when the decoded signal is to be adapted to end-device characteristics.

An example of a single-layer based distribution solution with display adaptation may be found in ETSI technical specification TS 103 433-2 V1.1.1 (January 2018). Such a single-layer based distribution solution is denoted SL-HDR2 in the following.

Such a single-layer based distribution solution, SL-HDR1 or SL-HDR2, generates metadata as parameters used for the reconstruction of the signal. Metadata may be either static or dynamic.

Static metadata means parameters representative of the video content or its format that remain the same for, for example, a video (set of images) and/or a program.

Static metadata are valid for the whole video content (scene, movie, clip...) and may depend on the image content per se or the representation format of the image content. The static metadata may define, for example, image format, color space, or color gamut. For instance, SMPTE ST 2086:2014, "Mastering Display Color Volume Metadata Supporting High Luminance and Wide Color Gamut Images" defines static metadata that describes the mastering display used to grade the material in a production environment. The Mastering Display Colour Volume (MDCV) SEI (Supplemental Enhanced Information) message corresponds to ST 2086 for both H.264/AVC (*"Advanced video coding for generic audiovisual Services",* SERIES H: AUDIOVISUAL AND MULTIMEDIA SYSTEMS, Recommendation ITU-T H.264, Telecommunication Standardization Sector of ITU, April 2017) and HEVC video codecs.

Dynamic metadata is content-dependent information, so that metadata could change with the image/video content, for example for each image or for each group of images. As an example, SMPTE ST 2094:2016, "Dynamic Metadata for Color Volume Transform" defines dynamic metadata typically generated in a production environment. SMPTE ST 2094-30 can be distributed in HEVC and AVC coded video streams using, for example, the Colour Remapping Information (CRI) SEI message.

The metadata used for reconstruction of the decoded signal at the end-display device's side are generated using characteristics extracted from the source material by an algorithm which is implemented in the SL-HDR pre-processor. Although this algorithm has already proven its efficiency on many contents, visual inspection showcases too dark processed content when source material peak luminance is above a thousand cd/m$^2$ (or nits).

1000 nits contents are those currently available since the advent of HDR displays (consumer and production -- mastering display -- ones). However, there is a will from the production community to minimize the number of masters to keep and store. In that case, it may be of interest to only keep the highest quality master i.e. the one with the higher gamut, bit-depth, dynamic range format. Besides, display technology is rapidly improving with brighter, more colorful, more precise pictures. With this regard, beyond 1000 nits content is being considered or created (sometimes along with matching reference 1000 nits content) even though the result might not be visually checked on most current HDR displays. It is however important that SL-HDR can handle this upcoming material as there may be a day only beyond 1000 nits content will be created without matching reference 1000 nits content. Indeed, SL-HDR1 enables transmission of an SDR signal (derived from the HDR source) which rendition should be similar whatever the HDR source peak luminance.

There is thus a need for a solution which would improve the conveyance of the artist intent to the end device even for a beyond 1000 nits content.

**3. Summary.**

The following presents a simplified summary of at least one embodiment in order to provide a basic understanding of some aspects of at least one embodiment. This summary is not an extensive overview of an embodiment. It is not intended to identify key or critical elements of an embodiment. The following summary merely presents some aspects of at least one embodiment in a simplified form as a prelude to the more detailed description provided elsewhere in the application.

According to a general aspect of at least one embodiment, there is provided a method for determining control parameters for mapping an input image of a content, said image comprising pixels having luminance values represented with a high dynamic range bounded by a maximum luminance value to an image of the same content, said image comprising pixels having luminance values represented with a lower dynamic range, said method comprising :

- the computation of an image characteristic parameter of the input image;
- the determination of said control parameters:

  ◦ from said image characteristic, if said input image has a maximum luminance value less or equal than a maximum reference luminance value ;
  ◦ otherwise, from a converted image characteristic, said converted image characteristic being configured to set at least one of said control parameters at a value that the determination step would have determined for a reference image of the same content, said reference image having intensities represented with a high dynamic range bounded by said maximum reference luminance.

The principle of the invention is thus to emulate the value of image characteristic for an input image having a dynamic range bounded by a maximum luminance value greater than a maximum reference luminance value, that would have beget the same value of said at least one parameter of said set as an equivalent material having a dynamic range bounded by the maximum reference luminance value.

Advantageously, the disclosed method keeps unchanged the determination of the parameters controlling a mapping function for an input image having a high dynamic range bounded by a maximum luminance value less than the maximum reference luminance value. On the contrary, for an input image having a dynamic range bounded by a maximum luminance value greater than a maximum reference luminance value, it provides a solution which only changes the input data of an algorithm for determination of the control parameters of the mapping function, without modifying the algorithm itself. This is of particular interest for a well-known algorithm, which has proven its efficiency on a large set of images having a high dynamic range bounded by the maximum reference luminance value. In this way, the proposed method also leverages all tweaks and heuristics of this algorithm for stability's sake.

According to another aspect of an embodiment, said image characteristic is an average maximal luminance value of the input image.

An advantage of this value is that it is eay to compute and it is representative of the global lightness or brightness of the input picture. The disclosed invention can then adapt this lightness to the brightness capabilities of the target display so that the image does not look globally too dark or too bright when displayed on this particular type of display. Other examples of image characteristics are provided in the detailed description.

According to another aspect of an embodiment, said control parameters determining a mapping function as a piece-wise luminance mapping curve in a perceptually uniform domain normalized to a maximum luminance value and comprising a first parameter controlling a slope of said bottom linear section of the curve, a second parameter controlling a slope of an upper linear section of said curve, and a third parameter controlling a width of a parabolic mid-section connecting the bottom linear section to the upper linear section, said first parameter is selected as said at least one control parameter.

An advantage of setting this first control parameter to the value of the corresponding control parameter determined for said reference image, is that it allows to keep the management of shadows consistent with the tone mapped reference image, and therefore to avoid the rendition of too dark processed content.

Another advantage is that, when using an algorithm for determination of control parameters such as the one specified in the ETSI TS 103 433-1 v1.2.1 standard, the second and third parameters are directly derived from the value of said first parameter. The mapping curve is thus completely determined.

According to another aspect of an embodiment, said method comprises a preliminary step comprising a regression of a conversion function of said image characteristic into said converted image characteristic.

Advantageously a model conversion function is predetermined and used for any input image.

According to another aspect of an embodiment, said preliminary step further comprises the application of said conversion function to a plurality of computed image characteristic parameters from a data set of images having a high dynamic range bounded by said maximum luminance value and the storage of the plurality of converted image characteristic parameters as a pluralities of entries of a look-up-table, an entry comprising an association of a value of a computed image characteristic with the converted image characteristic.

An advantage to store precomputed values is to spare computing and time resources. According to another aspect of an embodiment, said preliminary step comprises a sub-step of regressing a first conversion function of said image characteristic into a reference image characteristic of an image of the same content having a high dynamic range bounded by said maximum reference luminance value and a sub-step of regressing a second conversion function of said reference image characteristic into said converted image characteristic and a composition of said first and second conversion functions into said conversion function.

An advantage of such a composition is that it enables determining a unique conversion function. It may for instance be implemented as a single Look Up Table (LUT) rather than cascading two LUTs. This spares resources, avoid delays and precision errors due to the interpolation cascading.

According to another aspect of an embodiment, said regression of a first conversion function comprises the computation of a plurality of values of image characteristics from a dataset comprising a plurality of pairs of images of a same content, a first image of a pair comprising pixels having luminance values represented with a high dynamic range greater than said maximum reference luminance value and a second image of the pair comprising pixels having luminance values represented with a high dynamic range bounded by said maximum reference luminance value, the plotting of a plurality of points corresponding to the computed pairs of image characteristics and the determination of control parameters of a curve fitting said points and representing said first conversion function.

A database of dual graded pair of pictures having respectively a high dynamic range bounded by the maximum reference luminance value and by a maximum luminance value greater than the maximum reference luminance value is constituted and used for regressing the conversion function.

An advantage is that a relation between the image characteristics may be empirically established.

According to another aspect of an embodiment, said regression of a second conversion function comprises the determination of a normalized version of the reference image characteristic parameter in a perceptually unifom domain normalized to the maximum reference luminance value, as a function of the reference image characteristic parameter, the determination of the first reference parameter as a function of said normalized reference image characteristic in said perceptually-uniform domain normalized to said maximum reference luminance value and, stating equality of said first reference parameter with said first parameter, the reversion of a theoretical image characteristic in a perceptually uniform domain normalized to said maximum luminance value as a function of said reference image characteristic.

In this embodiment, the expression of said second conversion function is determined analytically. An advantage is that the exactly inverted image characteristic is obtained. Moreover, as the second and third parameters may be directly derived from the first control parameter, the analytical system to be solved is not too complex. Optionally, the analytical solution may be simplified by a numerical solution.

According to another aspect of an embodiment, said regression of a second conversion function further comprises the plotting of a plurality of points corresponding to pairs of values of said reference image characteristic and said theoretical image characteristic and the determination of control parameters of a curve fitting said points and representing said second conversion function.

Advantageously, an approximation is made which enables a more friendly implementation which allows to use a limited set of parameters to control the curve representing the second conversion function. The converted image characteristic value obtained from this fitting curve provides a good approximation of the theoretical second conversion function.

According to another aspect, said first conversion function is a linear function and said second conversion function is a parabolic function.

An advantage of these functions is that they are easy to implement as controlled with a very limited set of characteristics parameters.

According to another aspect, in said determination step said converted image characteristic is obtained by applying said conversion function.

According to another aspect, said determination step comprises the reading of said converted image characteristic in a Look-Up-Table (LUT), said Look-Up Table comprising a plurality of entries, an entry comprising an association of a value of a computed image characteristic with the converted image characteristic.

An advantage of using a LUT is that it avoids wasting computation time and resources. Only a discrete and finite number of pairs of characteristic values are stored. Precision of LUT entries as well as number of pairs may be determined empirically so that results are obtained with an appropriate performance, determined by the application. If there is no correspondence between a computed image characteristic parameter of the input image and a stored value, a linear interpolation of the closest stored values may be performed.

According to another general aspect of at least one embodiment, there is provided a device for determining control parameters for mapping an input image of a content, said image comprising pixels having luminance values represented with a high dynamic range bounded by a maximum luminance value to an image of the same content, said image comprising pixels having luminance values represented with a lower dynamic range, said device comprising a processor configured to :

- compute an image characteristic of the input image;
- determine said control parameters:

    ◦ from said image characteristic, if said input image has a maximum luminance value less or equal than a maximum reference luminance value;
    ◦ otherwise, from a converted image characteristic, said converted image characteristic being configured to set at least one of said control parameter at a value that the determination step would have determined for an image of the same content, said image having intensities represented with a high dynamic range bounded by said maximum reference luminance.

Such a device may implement any aspect of the previously presented method. According to a general aspect of another embodiment, there is further provided a system comprising said device.

One or more of the present embodiments also provide a computer program comprising instructions which when executed by one or more processors cause the one or more processors to carry out the above method. One or more of the present embodiments also provide a computer readable storage medium comprising instructions which when executed by a computer cause the computer to carry out the above method. One or more of the present embodiments also provide a computer readable medium containing data content generated according to the above method.

The specific nature of at least one embodiment as well as other objects, advantages, features and uses of at least one embodiment will become evident from the following description of examples taken in conjunction with the accompanying drawings.

### 4. Brief Description of Drawings.

In the drawings, examples of at least one embodiment are illustrated. It shows:

- **Fig. 1** shows a high-level representation of an end-to-end workflow supporting content delivery for displaying image/video in accordance with at least one embodiment;
- **Fig. 2** shows an example of the end-to-end workflow of **Fig. 1** supporting delivery to HDR and SDR CE displays in accordance with a single-layer based distribution solution;
- **Fig. 3** shows a particular implementation of the workflow of **Fig. 2;**
- **Fig. 4a** shows an illustration of an example of perceptual transfer function;

- **Fig. 4b** shows an example of a piece-wise curve used for mapping;
- **Fig. 4c** shows an example of a curve used for converting a perceptual uniform signal to a linear-light domain;
- **Fig. 5** illustrates a block diagram of an example of a system in which various aspects and embodiments are implemented;
- **Fig. 6** shows a block diagram of an example of a method for determining control parameters of a piece-wise curve for mapping in accordance with the prior art;
- **Fig. 7** shows a block diagram of an example of a method for determining control parameters for mapping in accordance with an embodiment;
- **Fig. 8A** shows a block diagram of an example of preliminary step for regression of a conversion function in accordance with an embodiment;
- **Fig. 8B** shows an example of a Look-Up-Table for storing points of a fitting curve of a conversion function in accordance with an embodiment;
- **Fig. 9A** shows a block diagram of an example of regression of a first conversion function of an input image characteristic into a reference image characteristic in accordance with an embodiment;
- **Fig. 9B** shows an example of a fitting curve of said first conversion function;
- **Fig. 10** shows a block diagram of an example of regression of a second regression fuction of said reference image characteristic into a converted image characteristic in accordance with an embodiment;
- **Fig. 11A** shows an example of a predetermined fitting curve of a second analytically determined conversion function in accordance with an embodiment;
- **Fig 11B** shows an example of a fitting curve of the conversion function composed from the first and second conversion functions in accordance with an embodiment; and
- **Fig. 12** shows a block diagram of an example of a pre-processing device in which various aspects and embodiments for determining control parameters for mapping are implemented.

Similar or same elements are referenced with the same reference numbers.

**5. Description of at least one embodiment.**

At least one embodiment is described more fully hereinafter with reference to the accompanying figures, in which examples of at least one embodiment are shown. An embodiment may, however, be embodied in many alternate forms and should not be construed as limited to the examples set forth herein. Accordingly, it should be understood that there is no intent to limit embodiments to the particular forms disclosed. On the contrary, the disclosure is intended to cover all modifications, equivalents, and alternatives falling within the spirit and scope of this application as defined by the claims.

The terminology used herein is for the purpose of describing particular examples only and is not intended to be limiting. As used herein, the singular forms "a", "an", and "the" are intended to include the plural forms as well, unless the context clearly indicates otherwise. It will be further understood that the terms "includes" and/or "including" when used in this specification, specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/". It will be understood that, although the terms first, second, etc. may be used herein to describe various elements, these elements are not be limited by these terms. These terms are only used to distinguish one element from another. For example, a first element could be termed a second element, and, similarly, a second element could be termed a first element without departing from the teachings of this application. Although some of the diagrams include arrows on communication paths to show a primary direction of communication, it is to be understood that communication may occur in the opposite direction to the depicted arrows. Some examples are described with regard to block diagrams and operational flowcharts in which each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved. Reference herein to "in accordance with an example" or "in an example" means that a particular feature, structure, or characteristic described in connection with the example can be included in at least one implementation. The appearances of the expression "in accordance with an example" or "in an example" in various places in the specification are not necessarily all referring to the same example, nor are separate or alternative examples necessarily mutually exclusive of other examples. Reference numerals appearing in the claims are by way of illustration only and shall have no limiting effect on the scope of the claims. Although not explicitly described, the present examples and variants may be employed in any combination or sub-combination.

In the following, image data refer to data, for example, one or several arrays of samples (for example, pixel values) in a specific image/video format, which specifies information pertaining to the pixel values of an image (or a video) and/or information which may be used by a display and/or any other apparatus to visualize and/or decode an image (or video) for example. An image typically includes a first component, in the shape of a first array of samples, usually representative of luminance (or luma) of the image, and a second component and a third component, in the shape of other arrays of samples, usually representative of the chrominance (or chroma) of the image. Some embodiments represent the same information using a set of arrays of color samples, such as the traditional tri-chromatic RGB representation.

A pixel value is represented in one or more embodiments by a vector of **C** values, where **C** is the number of components. Each value of a vector is typically represented with a number of bits which can define a dynamic range of the pixel values.

Standard Dynamic Range images (SDR images) are images whose luminance values are typically represented with a smaller number of bits (typically 8) than in High Dynamic Range images (HDR images). The difference between the dynamic ranges of SDR and HDR images is therefore relative, and SDR images can have, for example, more than 8 bits. Because of the smaller number of bits, SDR images often do not allow correct rendering of small signal variations or do not cover high range of luminance values, in particular in dark and bright luminance ranges. In HDR images, the signal representation is typically extended to maintain a higher accuracy of the signal over all or part of its range. For example, at least one embodiment represents an HDR image using 10-bits for luminance, and provides 4 times as many values than an 8-bit representation. The additional values allow a greater luminance range to be represented, and can also allow finer differences in luminance to be represented. In HDR images, pixel values are usually represented in floating-point format (typically at least 10 bits per component, namely float or half-float), the most popular format being openEXR half-float format (for example 48 bits per pixel) or in integers with a long representation, typically at least 16 bits when the signal is linear-light encoded (10-bits at least when it is encoded non-uniformly e.g. using ST 2084).

Typically, two different images have a different dynamic range of the luminance. The dynamic range of the luminance of an image is the ratio of the maximum over the minimum of the luminance values of the image.

Typically, when the dynamic range of the luminance of an image is below 1000 (for example 500: for example, 100 cd/m$^2$ over 0.2 cd/m$^2$), the image is denoted as a Standard Dynamic Range (SDR) image and when the dynamic range of the luminance of an image is equal to or greater than 1000 (for example 10000: for example, 1000 cd/m$^2$ over 0.1 cd/m$^2$) the image is denoted as an HDR image. Luminance is expressed by the unit candela per square meter (cd/m$^2$). This unit supersedes the term "nit" which may also be used.

At least one embodiment is described for pre-processing, encoding, decoding, and post-processing an image but extends to pre-processing, encoding, decoding, and post-processing a sequence of images (video) because each image of the sequence is sequentially pre-processed, encoded, decoded, and post-processed as described below.

In the following, a component $C_n^m$ designates a component **m** of an image **n.** These components $\{C_n^m\}$ with m=1,2,3, represent an image I$_n$ in a specific image format. Typically, an image format is characterized by a color volume (for example chromaticity and dynamic range), and a color encoding system (for example RGB, YCbCr..).

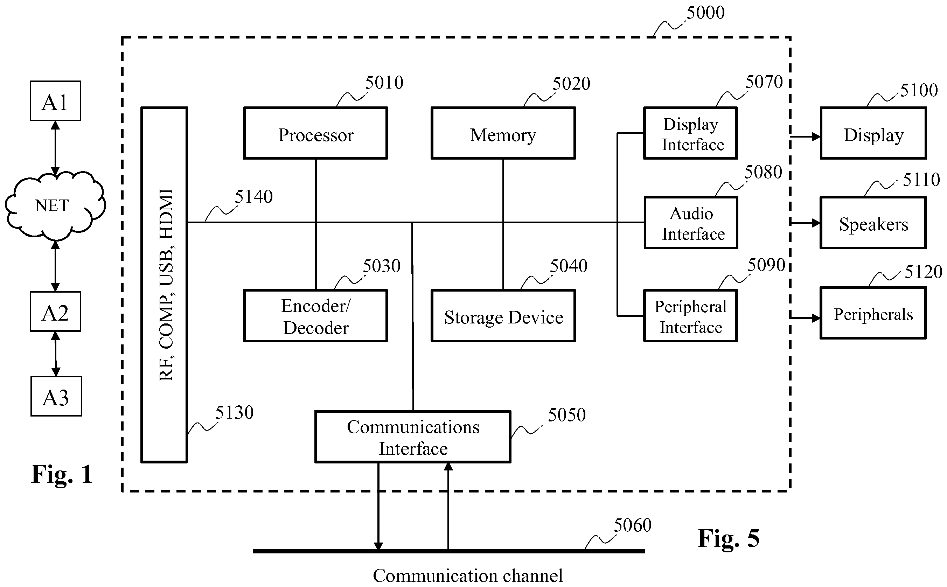

**Fig. 1** shows a high-level representation of an end-to-end workflow supporting content delivery for displaying image/video in accordance with at least one embodiment.

**Fig. 1** includes apparatuses A1, A2 and A3.

The remote apparatuses A1 and A2 are communicating over a distribution network NET that is configured at least to provide a bitstream from apparatus A1 to apparatus A2.

In accordance with an example, the distribution network NET is a broadcast network, adapted to broadcast still images or video images from apparatus A1 to a plurality of apparatuses A2. DVB-based and ATSC-based networks are examples of such broadcast networks.

In accordance with another example, the distribution network NET is a broadband network adapted to deliver still images or video images from apparatus A1 to a plurality of apparatuses A2. Internet-based networks, GSM networks, or TV over IP networks are examples of such broadband networks.

In an alternate embodiment, the distribution network NET is replaced by a physical packaged media on which the encoded image or video stream is stored.

Physical packaged media include, for example, optical packaged media such as Blu-ray disc and Ultra-HD Blu-ray, and memory-based package media such as used in OTT and VoD services.

The apparatus A1 includes at least one device configured to pre-process an input image/video and to encode, in the transmitted bitstream, an image/video and associated formatted metadata resulting of said pre-processing.

The apparatus A2 includes at least one device configured to decode a image/video from a received bitstream and to transmit to the apparatus A3 said decoded image/video and the associated formatted metadata over an uncompressed digital interface such as HDMI or Displayport for example.

The apparatus A3 includes at least one device configured to receive the decoded image/video and associated formatted metadata obtained from the bitstream. The at least one device included in apparatus A3 is also configured to obtain parameters by parsing said associated formatted metadata, to reconstruct another image/video by post-processing the decoded image/video (received from apparatus A2) using said parameters.

The at least one device of apparatuses A1, A2 and A3 belongs to a set of devices including, for example, a mobile device, a communication device, a game device, a tablet (or tablet computer), a computer device such as a laptop, a still image camera, a video camera, an encoding chip, a still image server, and a video server (for example a broadcast server, a video-on-demand server, or a web server), a computer device, a set top box, a TV set (or television), a tablet (or tablet computer), a display, a head-mounted display and a rendering/displaying chip.

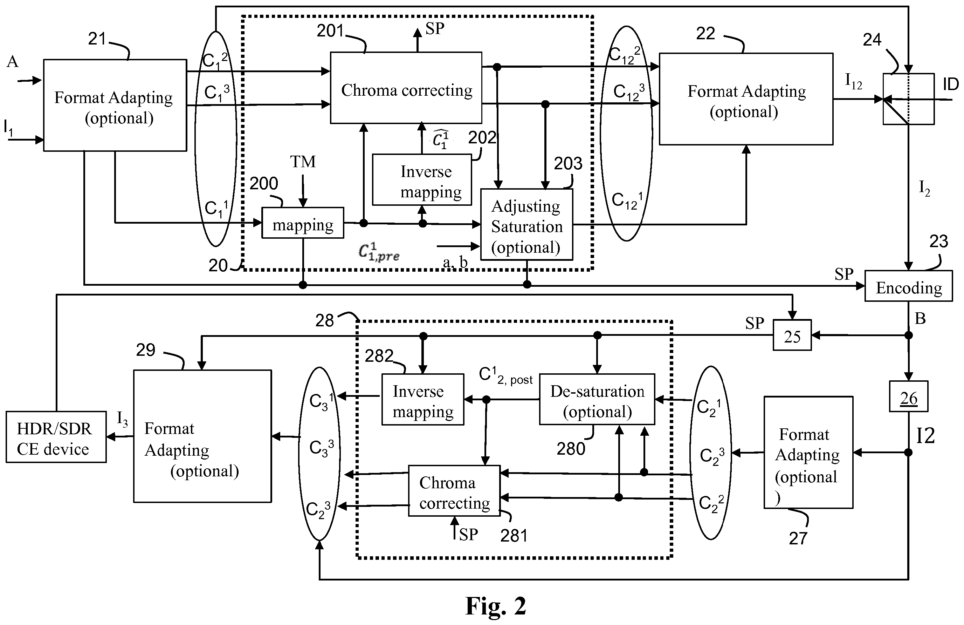

**Fig. 2** shows an example of the end-to-end workflow of **Fig. 1** supporting delivery to HDR and SDR CE displays in accordance with a single-layer based distribution solution.

Such a single-layer based distribution solution may address SDR direct backward compatibility. That is, the solution leverages SDR distribution networks and services already in place and enables high-quality HDR rendering on HDR-enabled CE devices including high-quality SDR rendering on SDR CE devices.

SL-HDR1 is one example of such a single-layer based distribution solution.

Such a single-layer based distribution solution may also relate to a solution used on distribution networks for which display adaptation dynamic metadata are delivered. This allows, for example, the content to be adapted to a user's display characteristics. For example, dynamic metadata can be delivered along with a PQ HDR video signal. PQ means "Perceptual Quantization" as specified in Rec. ITU-R BT.2100 "Recommendation ITU-R BT.2100-1, Image parameter values for high dynamic range television for use in production and international programme exchange".

The workflow shown in **Fig. 2** involves a single-layer based distribution solution with associated SL-HDR metadata. Such a method illustrates an example of the use of a method for reconstructing three components $\{C_{30}^m\}$ representative of three components $\{C_{10}^m\}$ of an input image. Such a reconstruction is based on three decoded components $\{\widehat{C_{20}^m}\}$ representative of a decoded image and the metadata as specified, for example, in SL-HDR1 or SL-HDR2.

An information data ID determines which of the single-layer based distribution solutions (for example SL-HDR1 or SL-HDR2) is used. Usually, in practice only one single-layer based distribution solution is used and the information data ID is a predetermined or fixed value. If more than one single-layer based distribution solution can be used, then the information data ID indicates which of these single-layer based distribution solutions is used.

Typically, SL-HDR1 and SL-HDR2 may be used and the information data ID indicates if either SL-HDR1 or SL-HDR2 has to be used.

As shown, the single-layer based distribution solution shown in **Fig. 2** includes a pre-processing step 20, an encoding step 23, decoding steps 25 and 26, and a post-processing step 28.

The input and the output of the pre-processing step 20 are triplets of components $\{C_1^m\}$ and $\{C_{12}^m\}$ respectively, and the input and the output of the post-processing step 28 are triplets of components $\{C_2^m\}$ and $\{C_3^m\}$ respectively.

The single-layer based distribution solution shown in **Fig. 2** may include optional format adaptation steps 21, 22, 27, 29 to adapt the format of three components $\{C_n^m\}$ to the input of a further processing to be applied on these components.

For example, in step 21 (optional), the format of the three components $\{C_{10}^m\}$ may be adapted to a format fitting an input format of the pre-processing step 20 or an input format of an encoding step 23. In step 22 (optional), the format of the three components $\{C_{12}^m\}$ may be adapted to a format fitting the input format of the encoding step 23.

In step 27 (optional), the format of the three components $\{\widehat{C_{20}^m}\}$ may be adapted to a format fitting the input of the post-processing step 28, and in step 29, the format of the three components $\{C_3^m\}$ may be adapted to a format that may be defined from at least one characteristic of a targeted apparatus 30 (for example a Set-Top-Box, a connected TV, HDR/SDR enabled CE device, an Ultra HD Blu-ray disc player).

The format adaptation steps (21, 22, 27, 29) may include color space conversion and/or color gamut mapping (and/or inverse color gamut mapping). Inverse color gamut mapping may be used, for example, when the three decoded components $\{\widehat{C^m_{20}}\}$ and the three components $\{C^m_{30}\}$ of an output image or the three components $\{C^m_{10}\}$ of an input image are represented in different color spaces and/or gamuts.

Usual format adapting processes may be used such as R'G'B'-to-Y'CbCr or Y'CbCr-to-R'G'B' conversions, BT.709-to-BT.2020 or BT.2020-to-BT.709, down-sampling or up-sampling chroma components, etc.

For example, SL-HDR1 may use format adapting processes and inverse gamut mapping as specified in Annex D of the ETSI technical specification TS 103 433-1 V1.2.1 (August 2017).

The input format adaptation step 21 may also include adapting the bit depth of the three components $\{C^m_{10}\}$ to bit depth such as 10 bits for example, by applying a transfer function on the three components $\{C^m_{10}\}$ such as a PQ or HLG transfer function or its inverse. The Recommendation Rec. ITU-R BT.2100 provides examples of such transfer functions.

In the pre-processing step 20, the three components $\{C^m_1\}$ are equal either to the three components $\{C^m_{10}\}$ when the format has not been adapted in step 21 or equal to adapted versions of these three components $\{C^m_{10}\}$ when the format of these components has been adapted in step 21. These three input components are decomposed into three components $\{C^m_{12}\}$ and a set of parameters SP formed by parameters coming from step 21, 200, 201 and/or 203. The format of the three components $\{C^m_{12}\}$ may be optionally adapted during step 22 to get the three components $\{C^m_{120}\}$.

A switching step 24 determines if the three components $\{C^m_{20}\}$ equals either the three components $\{C^m_{120}\}$ or the three components $\{C^m_1\}$.

In step 23, the three components $\{C^m_{20}\}$ may be encoded with any video codec and the output is a signal including the bitstream B. The output signal is carried throughout a distribution network.

According to variant of step 23, the set of parameters SP and/or the information data ID are conveyed as associated static and/or dynamic metadata in the bitstream B, or out-of-band (i.e. not in the bitstream B but either as predetermined values known by the receiver or as a part of another stream on another communication channel e.g. using SIP or H.323 protocoles).

According to a variant, the set of parameters SP and/or the information data ID are conveyed as associated static and/or dynamic metadata on a specific channel.

At least one signal, intended to be decoded by the apparatus A2 of **Fig. 1**, carries the bitstream B which can include the accompanying metadata.

In a variant, the bitstream B is stored on a storage medium such as a (UltraHD) Blu-ray disk or a hard disk or a memory of a Set-Top-Box for example.

In a variant, at least some accompanying associated metadata is stored on a storage medium such as an (UltraHD) Blu-ray disk or a hard disk or a memory of a Set-Top-Box for example.

In at least one implementation, in step 23, a sequence of at least one triplet of components $\{C^m_{20}\}$, each representing an image, and possibly associated metadata, are encoded with a video codec such as an H.265/HEVC codec or an H.264/AVC codec.

In step 25, the set of parameters SP is obtained at least partially either from the bitstream B or from another specific channel. At least one of the parameters of the set of parameters SP may also be obtained from a separate storage medium.

In step 26, the three decoded components $\{\widehat{C^m_{20}}\}$ are obtained from the bitstream B.

The post-processing step 28 is a functional inverse, or substantially a functional inverse, of the pre-processing step 20. In the post-processing step 28, the three components $\{C^m_{30}\}$ are reconstructed from the three decoded

components $\{\widehat{C_{20}^m}\}$ and the obtained set of parameters SP.

In more details, the pre-processing step 20 includes steps 200-203.

In step 200, a component $C_{1,pre}^1$ is obtained by applying a mapping function on the component $C_1^1$ of the three components $\{C_1^m\}$. The component $C_1^1$ represents the luminance of the input image.

Mathematically speaking,

$$C_{1,pre}^1 = MF(C_1^1) \qquad (1)$$

with MF being a mapping function that may reduce or increase the dynamic range of the luminance of an image. Note that its inverse, denoted IMF, may increase or reduce, respectively, the dynamic range of the luminance of an image.

In step 202, a reconstructed component $\widehat{C_1^1}$ is obtained by applying an inverse-mapping function on the component $C_{1,pre}^1$:

$$\widehat{C_1^1} = IMF(C_{1,pre}^1) \qquad (2)$$

where IMF is the functional inverse of the mapping function MF. The values of the reconstructed component $\widehat{C_1^1}$ belong thus to the dynamic range of the values of the component $C_1^1$.

In step 201, the components $C_{12}^2$ and $C_{12}^3$ are derived by correcting the components $C_1^2$ and $C_1^3$ representing the chroma of the input image according to the component $C_{1,pre}^1$ and the reconstructed component $\widehat{C_1^1}$.

This step 201 allows control of the colors obtained from the three components $\{C_{12}^m\}$ and allows perceptual matching to the colors of the input image. The correction of the components $C_1^2$ and $C_1^3$ (usually denoted chroma components) may be maintained under control by tuning the parameters of the chroma correcting and inverse mapping steps. The color saturation and hue obtained from the three components $\{C_{12}^m\}$ are thus under control. Such a control is not possible, usually, when a non-parametric mapping function (step 200) is used.

Optionally, in step 203, the component $C_{1,pre}^1$ may be adjusted to further control the perceived saturation, as follows:

$$C_{12}^1 = C_{1,pre}^1 - \max(0, a.C_{12}^2 + b.C_{12}^3) \qquad (3)$$

where a and b are two parameters.

This step 203 allows control of the luminance (represented by the component $C_{12}^1$) to allow a perceived color matching between the colors (saturation and hue) obtained from the three components $\{C_{12}^m\}$ and the colors of the input image.

The set of parameters SP may include information data related to the mapping function or its inverse (steps 200, 202 and 282), information data related to the chroma correcting (steps 201 and 281), information data related to the saturation adjusting function, in particular their parameters a and b (step 203), and/or information related to the optional conversion used in the format adapting stages 21, 22, 27, 29 (for example gamut mapping and/or inverse gamut mapping parameters).

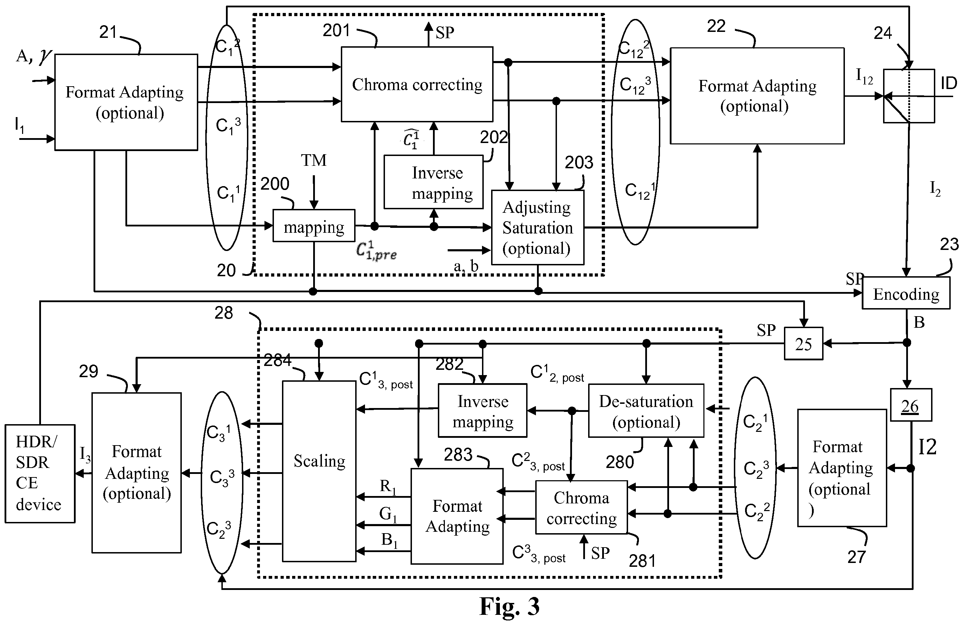

The set of parameters SP may also include the information data ID and information characteristics of the output image, for example the format of the three components $\{C_{30}^m\}$ representative of the output image (steps 29 of **Fig.2** and **3,** 284 of **Fig.3**).

In more details, the post-processing step 28 includes steps 280-282 which take as input at least one parameter of the set of parameters SP.

In optional step 280, the component $C_2^1$ of the three components $\{C_2^m\}$, output of step 27, may be adjusted as follows:

$$C_{2,post}^1 = C_2^1 + \max(0, a.C_2^2 + b.C_2^3) \qquad (4)$$

where a and b are two parameters of the set of parameters SP.

For example, the step 280 is executed when the information data ID indicates that SL-HDR1 has to be considered and not executed when it indicates that SL-HDR2 has to be considered.

In step 282, the component $C_3^1$ of the three components $\{C_3^m\}$ is obtained by applying a mapping function on the component $C_2^1$ or, optionally, $C_{2,post}^1$:

$$C_3^1 = MF1\left(C_{2,post}^1\right) \qquad (5)$$

where MF1 is a mapping function derived from at least one parameter of the set of parameters SP.

In step 281, the components $C_3^2$, $C_3^3$ of the three components $\{C_3^m\}$ are derived by inverse correcting the components $C_2^2$, $C_2^3$ of the three components $\{C_2^m\}$ according to the component $C_2^1$ or, optionally, $C_{2,post}^1$.

According to an embodiment, the components $C_2^2$ and $C_2^3$ are multiplied by a chroma correcting function $\beta(.)$ as defined by parameters of the set of parameters SP and whose value depends on the component $C_2^1$ or, optionally, $C_{2,post}^1$.

Mathematically speaking, the components $C_3^2$, $C_3^3$ are given by:

$$\begin{bmatrix} C_3^2 \\ C_3^3 \end{bmatrix} = \beta(C_2^1) \begin{bmatrix} C_2^2 \\ C_2^3 \end{bmatrix} \qquad (6)$$

or optionally,

$$\begin{bmatrix} C_3^2 \\ C_3^3 \end{bmatrix} = \beta\left(C_{2,post}^1\right) \begin{bmatrix} C_2^2 \\ C_2^3 \end{bmatrix} \qquad (6bis)$$

**Fig. 3** represents a hardware-friendly version of a single layer-based solution of **Fig. 2**. The version includes two additional steps 283 and 284 and allows a reduction in complexity for hardware implementations by reducing buses bitwidth use.

In step 283, three components denoted ($R_1$, $G_1$, $B_1$) are obtained from components $C_{3,post}^2$ and $C_{3,post}^3$,

outputs of the step 281, by taking into account parameters of the set of parameters SP:

$$\begin{bmatrix} R_1 \\ G_1 \\ B_1 \end{bmatrix} = \begin{bmatrix} 1 & 0 & m_0 \\ 1 & m_1 & m_2 \\ 1 & m_3 & 0 \end{bmatrix} \times \begin{bmatrix} S_0 \\ C^2_{3,post} \\ C^3_{3,post} \end{bmatrix}$$

where $m_0$, $m_1$, $m_2$, $m_3$ are parameters of the set of parameters SP and $S_0$ is derived from the components $C^2_{3,post}$ and $C^3_{3,post}$ and other parameters of the set of parameters SP.

In step 284, the three components $\{C^m_3\}$ are then obtained by scaling the three components ($R_1$, $G_1$, $B_1$) according to a component $C^1_{3,post}$, output of step 282.

$$\begin{cases} C^1_3 = C^1_{3,post} \times R_1 \\ C^2_3 = C^1_{3,post} \times G_1 \quad (7) \\ C^3_3 = C^1_{3,post} \times B_1 \end{cases}$$

where $MF1(C^1_{2,post})$ (step 282).

According to a first embodiment of the end-to-end workflow of **Fig. 2** or **Fig. 3,** the information data ID indicates that SL-HDR1 has to be considered.

The mapping function MF(.) in eq. (1) reduces the dynamic range of the luminance of the input image, its inverse IMF(.) in eq. (2) increases the dynamic range of the component $C^1_{1,pre}$, and the mapping function MF1(.) in eq.(5) increases the dynamic range of the component $C^1_{2,post}$.

According to a first variant of the first embodiment, the component $C^1_1$ is a nonlinear signal, denoted luma in literature, which is obtained (step 21) from the gamma-compressed RGB components of the input image by:

$$C^1_1 = A_1 \begin{bmatrix} R^{1/\gamma} \\ G^{1/\gamma} \\ B^{1/\gamma} \end{bmatrix} \qquad (8)$$

where $\gamma$ may be a gamma factor, equal to 2.4 in some implementations.

According to the first variant, the component $C^2_1$, $C^3_1$ are obtained (step 21), by applying a gamma compression to the RGB components of the input image:

$$\begin{bmatrix} C^2_1 \\ C^3_1 \end{bmatrix} = \begin{bmatrix} A_2 \\ A_3 \end{bmatrix} \begin{bmatrix} R^{1/\gamma} \\ G^{1/\gamma} \\ B^{1/\gamma} \end{bmatrix} \qquad (9)$$

where $A = [A_1\ A_2\ A3]^T$ is the canonical 3x3 R'G'B'-to-Y'CbCr conversion matrix (for example Recommendation ITU-R BT.2020-2 or Recommendation ITU-R BT.709-6 depending on the color space), $A1$, $A_2$, $A_3$ being 1×3 matrices where

$$A_1 = [A_{11} \quad A_{12} \quad A_{13}]$$
$$A_2 = [A_{21} \quad A_{22} \quad A_{23}]$$
$$A_3 = [A_{31} \quad A_{32} \quad A_{33}]$$

where $A_{mn}$ (m=1,..,3, n=1,..3) are matrix coefficients.

In step 201, according to the first variant, the components $C_1^2$ and $C_1^3$ are corrected from the ratio between the component $C_{1,pre}^1$ over the product of the gamma-compressed reconstructed component $\widehat{C_1^1}$ by $\Omega(C_{1,pre}^1)$:

$$\begin{bmatrix} C_{12}^2 \\ C_{12}^3 \end{bmatrix} = \frac{c_{1,pre}^1}{\Omega(c_{1,pre}^1).\widehat{c_1^1}^{1/\gamma}} \cdot \begin{bmatrix} C_1^2 \\ C_1^3 \end{bmatrix} \qquad (10)$$

where $\Omega(C_{1,pre}^1)$ is a value that depends on the component $C_{1,pre}^1$ but may also be a constant value depending on the color primaries of the three components $\{C_1^m\}$. $\Omega(C_{1,pre}^1)$ may equal to 1.2 for Rec. BT.2020 for example. Possibly, $\Omega(C_{1,pre}^1)$ may also depend on parameters as specified in ETSI TS 103 433-1 V.1.2.1 clause C.2.3. $\Omega(C_{1,pre}^1)$ may also be a parameter of the set of parameters SP.

Further, according to the first variant, the three components $\{C_{120}^m\}$ may represent a Y'CbCr 4:2:0 gamma transfer characteristics video signal.

For example, the control parameters relative to the mapping function MF and/or its inverse IMF and/or the mapping function MF1(.) may be determined as specified in Clause C.3.2 (ETSI technical specification TS 103 433-1 V1.2.1). The chroma correcting function β(.) and their parameters may be determined as specified in Clause C.2.3 and C.3.4 (ETSI technical specification TS 103 433-1 V1.2.1). Information data related to the control parameters, information data related to the mapping functions or their inverse, and information data related to the chroma correcting function β(.) and their parameters, are parameters of the set of parameters SP. Examples of numerical values of the parameters of the set of parameters SP may be found, for example, in Annex F (Table F.1 of ETSI technical specification TS 103 433-1 V1.2.1).

The parameters $m_0$, $m_1$, $m_2$, $m_3$ and $S_0$ may be determined as specified in Clause 6.3.2.6 (matrixCoefficient[i] are defining $m_0$, $m_1$, $m_2$, $m_3$) and Clause 6.3.2.8 (kCoefficient[i] are used to construct $S_0$) of ETSI technical specification TS 103 433-1 V1.2.1 and their use for reconstruction may be determined as specified in Clause 7.2.4 (ETSI technical specification TS 103 433-1 V1.2.1).

According to a second variant of the first embodiment, the component $C_1^1$ is a linear-light luminance component L obtained from the RGB component of the input image $I_1$ by:

$$C_1^1 = L = A_1 \begin{bmatrix} R \\ G \\ B \end{bmatrix} \qquad (11)$$

According to the second variant, the component $C_1^2$, $C_1^3$ are derived (step 21) by applying a gamma compression to the RGB components of the input image $I_1$:

$$\begin{bmatrix} C_1^2 \\ C_1^3 \end{bmatrix} = \begin{bmatrix} A_2 \\ A_3 \end{bmatrix} \begin{bmatrix} R^{1/\gamma} \\ G^{1/\gamma} \\ B^{1/\gamma} \end{bmatrix} \qquad (12)$$

According to the second variant, the component $C_{12}^2$, $C_{12}^3$ are derived (step 201) by correcting the components $C_1^2$, $C_1^3$ from the ratio between the first component $C_{1,pre}^1$ over the product of the gamma-compressed reconstructed component $\widehat{C_1^1}$ by $\Omega(C_{1,pre}^1)$.

$$\begin{bmatrix} C_{12}^2 \\ C_{12}^3 \end{bmatrix} = \frac{c_{1,pre}^1}{\Omega(c_{1,pre}^1).\widehat{c_1^1}^{1/\gamma}} \begin{bmatrix} C_1^2 \\ C_1^3 \end{bmatrix} \qquad (13)$$

where $\Omega(C_{1,pre}^1)$ is a value that depends on the component $C_{1,pre}^1$ and, is possibly, obtained from parameters as

$$\Omega(C_{1,pre}^1) = \frac{1}{Max(R_{sgf}:255;R_{sgf}.g(Y_n))}$$

specified in ETSI TS 103 433-1 V.1.2.1 clause C.3.4.2 where in equation (22). $\Omega(C_{1,pre}^1)$ may also be a parameter of the set of parameters SP.

Further, according to the second variant, the three components $\{C_{120}^m\}$ may represent a Y'CbCr 4:2:0 gamma transfer characteristics video signal.

For example, the control parameters related to the mapping function MF and/or its inverse IMF and/or the mapping function MF1(.) may be determined as specified in Clause C.3.2 (ETSI technical specification TS 103 433-1 V1.2.1). The chroma correcting function β(.) and their parameters may be determined as specified in Clause 7.2.3.2 (ETSI technical specification TS 103 433-2 V1.1.1) eq. (25) where $f_{sgf}(Y_n)$ = 1. Information data related to the control parameters, information data related to the mapping functions or their inverse, and information data related to the chroma correcting function β(.) and their parameters, are parameters of the set of parameters SP.

The parameters $m_0$, $m_1$, $m_2$, $m_3$ and $S_0$ may be determined as specified in Clause 6.3.2.6 (matrixCoefficient[i] are defining $m_0$, $m_1$, $m_2$, $m_3$) and Clause 6.3.2.8 (kCoefficient[i] are used to construct $S_0$) of ETSI technical specification TS 103 433-1 V1.2.1. Use of the parameters for reconstruction may be determined as specified in Clause 7.2.4 (ETSI technical specification TS 103 433-1 V1.2.1).

According to a second embodiment of the end-to-end workflow of **Fig. 2** or **Fig. 3,** the information data ID indicates that SL-HDR2 has to be considered.

In the second embodiment, the three components $\{C_1^m\}$ may be represented as a Y'CbCr 4:4:4 full range PQ10 (PQ 10 bits) video signal (specified in Rec. ITU-R BT.2100). The three components $\{C_{20}^m\}$, which represent PQ 10-bit image data and associated parameter(s) computed from the three components $\{C_1^m\}$ (typically 10, 12 or 16 bits), are provided. The provided components are encoded (step 23) using, for example an HEVC Main 10 profile encoding scheme. Those parameters are set to the set of parameters SP.

The mapping function MF1(.) in eq.(5) may increase or reduce the dynamic range of the component $C_{2,post}^1$ according to variants.

For example, the mapping function MF1(.) increases the dynamic range when the peak luminance of the connected HDR CE displays is above the peak luminance of the content. The mapping function MF1(.) decreases the dynamic range when the peak luminance of the connected HDR or SDR CE displays is below the peak luminance of the content. For example, the peak luminances may be parameters of the set of parameters SP.

For example, the control parameters related to the mapping function MF1 may be determined as specified in Clause C.3.2 (ETSI technical specification TS 103 433-1 V1.2.1). The chroma correcting function $\beta(.)$ and their parameters may be determined as specified in Clause 7.2.3.2 (ETSI technical specification TS 103 433-2 V1.1.1) eq. (25) where $f_{sgf}(Y_n) = 1$. Information data related to the control parameters, information data related to the mapping function, and information data related to the chroma correcting function $\beta(.)$ and their parameters, are parameters of the set of parameters SP. Examples of numerical values of the parameters of the set of parameters SP may be found, for example, in Annex F (Table F.1) (ETSI technical specification TS 103 433-2 V1.1.1).

The parameters $m_0$, $m_1$, $m_2$, $m_3$ (defined by matrixCoefficient[i] in ETSI technical specification TS 103 433-2 V1.1.1) and $S_0$ (constructed with kCoefficient[i] in ETSI technical specification TS 103 433-2 V1.1.1) may be determined as specified in Clause 7.2.4 (ETSI technical specification TS 103 433-2 V1.1.1).

According to a first variant of the second embodiment, the three components $\left\{C_{30}^m\right\}$ representative of the output image are the three components $\left\{\widehat{C_{20}^m}\right\}$.

According to a second variant of the second embodiment, in the post-processing step 28, the three components $\left\{C_3^m\right\}$ are reconstructed from the three components $\left\{\widehat{C_{20}^m}\right\}$ and parameters of the set of parameters SP after decoding (step 25).

The three components $\left\{C_3^m\right\}$ are available for either an SDR or HDR enabled CE display. The format of the three components $\left\{C_3^m\right\}$ are possibly adapted (step 29) as explained above.

The mapping function MF(.) or MF1(.) is based on a perceptual transfer function. The goal of the perceptual transfer function is to convert a component of an input image into a component of an output image, thus reducing (or increasing) the dynamic range of the values of their luminance. The values of a component of the output image belong thus to a lower (or greater) dynamic range than the values of the component of an input image. The perceptual transfer function uses a limited set of control parameters.

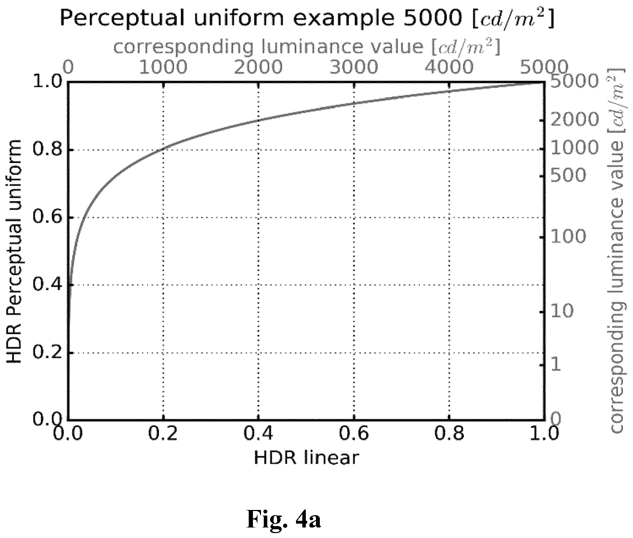

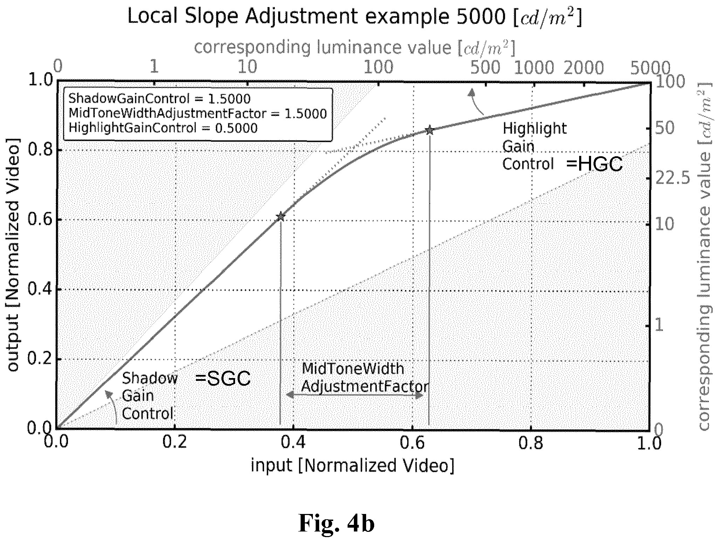

**Fig. 4a** shows an illustration of an example of a perceptual transfer function that may be used for mapping luminance components but a similar perceptual transfer function for mapping the luminance component may be used. The mapping is controlled by a mastering display peak luminance parameter (equal to 5000 cd/m$^2$ in **Fig. 4a**). To better control the black and white levels, a signal stretching between content-dependent black and white levels is applied. Then the converted signal is mapped using a piece-wise curve constructed out of three parts, as illustrated in **Fig. 4b.** The lower and upper sections are linear, the steepness is determined by the *shadowGain* and *highlightGain* control parameters respectively. The mid-section is a parabola providing a continuous and smooth bridge between the two linear sections. The width of the cross-over is determined by the *midToneWidthAdjFactor* parameter. All the parameters controlling the mapping may be conveyed as metadata for example by using an SEI message as specified in ETSI TS 103 433-1 Annex A.2 metadata.

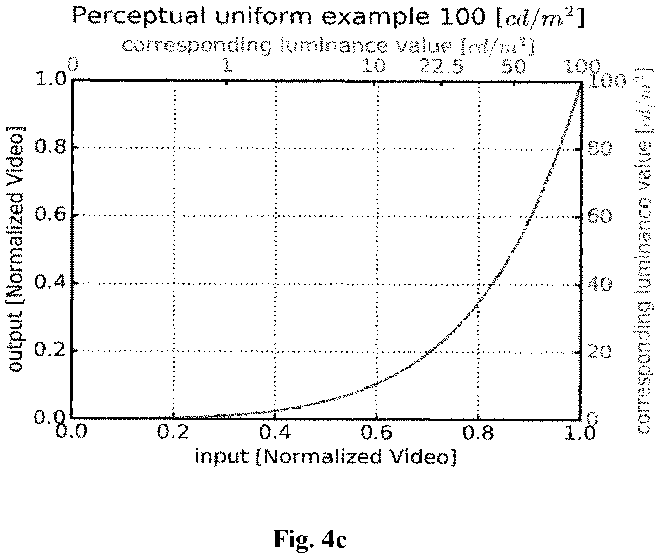

**Fig. 4c** shows an example of the inverse of the perceptual transfer function TM **(Fig. 4a)** to illustrate how a perceptually optimized luminance signal may be converted back to the linear-light domain based on a targeted legacy display maximum luminance, for example 100 cd/m$^2$.

In step 25 **(Fig. 2** or **3),** the set of parameters SP is obtained to reconstruct the three components $\left\{C_3^m\right\}$ from the three components $\left\{\widehat{C_{20}^m}\right\}$. These parameters may be obtained from metadata obtained from a bitstream, for example the bitstream B.

ETSI TS 103 433-1 V1.2.1 clause 6 and Annex A.2 provide an example of syntax of the metadata. The syntax of this ETSI recommendation is described for reconstructing an HDR video from an SDR video but this syntax may extend to the reconstruction of any image from any decoded components. As an example, TS 103 433-2 V1.1.1 uses the same syntax for reconstructing a display adapted HDR video from an HDR video signal (with a different dynamic range).

According to ETSI TS 103 433-1 V1.2.1, the dynamic metadata may be conveyed according to either a so-called parameter-based mode or a table-based mode. The parameter-based mode may be of interest for distribution workflows that have a goal of, for example, providing direct SDR backward compatible services with very low additional payload or bandwidth usage for carrying the dynamic metadata. The table-based mode may be of interest for workflows equipped with low-end terminals or when a higher level of adaptation is required for representing properly both HDR and SDR streams. In the parameter-based mode, dynamic metadata to be conveyed include luminance mapping parameters representative of the inverse mapping function to be applied at the post-processing step, that is *tmInputSig-*

*nalBlackLevelOffset; tmInputSignalWhiteLevelOffset; shadowGain; highlightGain; midToneWidthAdjFactor; tmOutput-FineTuning* parameters.

Moreover, other dynamic metadata to be conveyed include color correction parameters (*saturationGainNumVal, saturationGainX(i)* and *saturationGainY(i)*) used to fine-tune the default chroma correcting function $\beta$(.) as specified in ETSI TS 103 433-1 V1.2.1 clauses 6.3.5 and 6.3.6. The parameters a and *b* may be respectively carried in the *saturationGain* function parameters as explained above. These dynamic metadata may be conveyed using, for example, the HEVC *SL-HDR Information* (SL-HDRI) user data registered SEI message (see ETSI TS 103 433-1 V1.2.1 Annex A.2) or another extension data mechanism such as specified in the AVS2/IEEE1857.4 specification. Typical dynamic metadata payload size is less than 100 bytes per picture or scene.

Back to **Fig.3,** in step 25, the SL-HDRI SEI message is parsed to obtain at least one parameter of the set of parameters SP.

In step 282 and 202, the inverse mapping function (so-called lutMapY) is reconstructed (or derived) from the obtained mapping parameters (see ETSI TS 103 433-1 V1.2.1 clause 7.2.3.1 for more details; same clause for TS 103 433-2 V1.1.1).

In step 282 and 202, the chroma correcting function $\beta$(.) (so-called lutCC) is also reconstructed (or derived) from the obtained color correction parameters (see ETSI TS 103 433-1 V1.2.1 clause 7.2.3.2 for more details; same clause for TS 103 433-2 V1.1.1).

In the table-based mode, dynamic data to be conveyed include pivots points of a piece-wise linear curve representative of the mapping function. For example, the dynamic metadata are *luminanceMappingNumVal* that indicates the number of the pivot points, *luminanceMappingX* that indicates the abscissa (x) values of the pivot points, and *luminanceMappingY* that indicates the ordinate (y) values of the pivot points (see ETSI TS 103 433-1 V1.2.1 clauses 6.2.7 and 6.3.7 for more details). Moreover, other dynamic metadata to be conveyed may include pivots points of a piece-wise linear curve representative of the chroma correcting function $\beta$(.). For example, the dynamic metadata are *colorCorrectionNumVal* that indicates the number of pivot points, *colorCorrectionX* that indicates the x values of pivot points, and *colorCorrectionY* that indicates the y values of the pivot points (see ETSI TS 103 433-1 V1.2.1 clauses 6.2.8 and 6.3.8 for more details). These dynamic metadata may be conveyed using, for example, the HEVC *SL-HDRI* SEI message (mapping between clause 6 parameters and annex A distribution metadata is provided in Annex A.2.3 of ETSI TS 103 433-1 V1.2.1).

In step 25, the SL-HDRI SEI message is parsed to obtain the pivot points of a piece-wise linear curve representative of the inverse mapping function and the pivot points of a piece-wise linear curve representative of the chroma correcting function $\beta$(.), and the chroma to luma injection parameters a and b.

In step 282 and 202, the inverse mapping function is derived from those pivot points relative to a piece-wise linear curve representative of the inverse mapping function ITM (see ETSI TS 103 433-1 V1.2.1 clause 7.2.3.3 for more details; same clause for ETSI TS 103 433-2 V1.1.1).

In step 281 and 201, the chroma correcting function $\beta$(.), is also derived from those of the pivot points relative to a piece-wise linear curve representative of the chroma correcting function $\beta$(.) (see ETSI TS 103 433-1 V1.2.1 clause 7.2.3.4 for more details; same clause for TS 103 433-2 V1.1.1).

Note that static metadata also used by the post-processing step may be conveyed by SEI message. For example, the selection of either the parameter-based mode or table-based mode may be carried by the payloadMode information as specified by ETSI TS 103 433-1 V1.2.1 (clause A.2.2). Static metadata such as, for example, the color primaries or the maximum mastering display luminance are conveyed by a Mastering Display Colour Volume (MDCV) SEI message as specified in AVC, HEVC or embedded within the SL-HDRI SEI message as specified in ETSI TS 103 433-1 V1.2.1 Annex A.2.

According to an embodiment of step 25, the information data ID is explicitly signaled by a syntax element in a bitstream and thus obtained by parsing the bitstream. For example, the syntax element is a part of an SEI message such as sl_hdr_mode_value_minus1 syntax element contained in an SL-HDRI SEI message.

According to an embodiment, the information data ID identifies the processing that is to be applied to the input image to process the set of parameters SP. According to this embodiment, the information data ID may then be used to deduce how to use the parameters to reconstruct the three components $\left\{C_3^m\right\}$ (step 25).

For example, when equal to 1, the information data ID indicates that the set of parameters SP has been obtained by applying the SL-HDR1 pre-processing step (step 20) to an input HDR image, and that the three components $\left\{\widehat{C_{20}^m}\right\}$ are representative of an SDR image. When equal to 2, the information data ID indicates that the parameters have been obtained by applying the SL-HDR2 pre-processing step (step 20) to an HDR 10 bits image (input of step 20), and that the three components $\left\{\widehat{C_{20}^m}\right\}$ are representative of an HDR10 image.

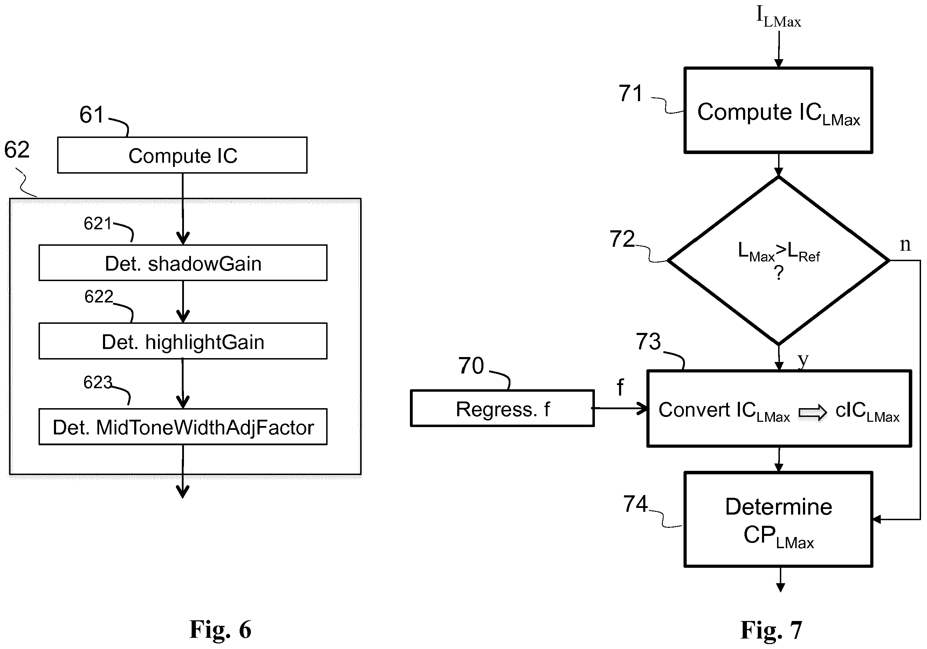

**Fig. 6** shows steps of an exemplary method for determining parameters controlling the piece-wise curve of the mapping function MF to be applied to the luminance component $C_1^1$ of the input image by the pre-processing step 20, as specified by clause C.3.2 of ETSI TS 103 433-1 V1.2.1. An example of the determined mapping curve is illustrated by Fig. 4B. The input image is an HDR content source.

In step 61, a characteristic of the luminance of the input image is extracted.

In clause C.3.2, this characteristic is the average over the picture of the maximum value of each red, green or blue subpixel of a pixel, known as the picture average of maxRGB or avgMaxRGB.

avgMaxRGB may be computed by the following C pseudo-code:

```
CalculateAvgMaxRGB()
{
    set maxRGB = 0
    set nbOfPixelsInPicture = 0
    for each (pixel P(R,G,B) in the picture)
    {
        maxRGB += Max(R, Max(G, B))
        nbOfPixelsInPicture++
    }
    avgMaxRGB = maxRGB/ nbOfPixelsInPicture
}
```

In an examplary implementation of the SL-HDR pre-processing algorithm, parameters values of the luminance mapping curve are practically determined in a step 62 from this single characteristic extracted from each picture of the HDR source material.

In sub-step 621, a first control parameter corresponding to the steepness *shadowGain* of the bottom linear section of the piece-wise curve is computed from this *avgMaxRGB* value.

As a first example described in equation (C.52) of C.3.2.3 of ETSI TS 103 433-1 v1.2.1 we have:

$$bg = Min\left(nomGain \times Max\left(1\,;\left(2 - \frac{LightnessHDR}{LightnessHDRHigh}\right) \div bwGain\right)\,;\,1\right)$$

where *LightnessHDR* may correspond to avgMaxRGB converted to a perceptually uniform domain as follows:

$$LightnessHDR = v\left(\frac{avgMaxRGB}{PeakNit}\,;PeakNit\right)$$

with *v(x;y)*, perceptual uniform transform, specified by (C.42) of ETSI TS 103 433-1 v1.2.1 and *PeakNit* being the maximum luminance of the HDR mastering display used to grade the HDR material. The perceptually uniform domain is normalized to *PeakNit*. *bg* (also called exposure, see equations (C.23) and (C.55) of Clause C3.2 of ETSI TS 103 433-1 v1.2.1) is representative of *shadowGain* (see equation (C.55) of Clause C.3.2.3):

$$shadowGain = 4 \times (bg - 0{,}5)$$

Other parameters are explicated in clause C.3.2.3 of ETSI TS 103 433-1 v1.2.1.

In another implementation which allows different artistic intent for the SDR generation (e.g. a "movie" mode for cinema content and a "broadcast" mode for TV content), *bg* determination is not coded as in (C.52) but as follows:

$$bg = nomGain \times \left( 1 + Gfactor \times \left( 1 - \frac{LightnessHDR}{LightnessHDRHigh} \right) \right)$$

with *Gfactor* is equal to 0.75 in the so-called "movie" mode and 1.0 in the "broadcast" mode, *LightnessHDRHigh* is representative of the brightness of the target picture equal to 0.8. *nomGain* depends on the peak luminance of the HDR display used to master the HDR content.

This latest operation is possibly followed by a clipping between *bg_min* and *bg_max,* a temporal filtering such as described in clause C.3.3 of ETSI TS 103 433-1 v1.2.1_and a scaling by *bwGain.*

In sub-step 622, a second control parameter corresponding to the steepness *highlightGain* of the upper linear section of the piece-wise curve of the mapping function MF is either computed with a dependence to *shadowGain* such as specified in clause C.3.2.4 of ETSI TS 103 433-1 v1.2.1._

This parameter *highlightGain* may be automatically derived from *bg* according to equations (C.56) and (C.57) :

$$dg = Clip3(0.25 \times nomGain\,;0.5 \times nomGain\,;\ 0.375 - 0.25 \times bg\,)$$

$$highlightGain = \frac{4.dg}{nomGain}$$

Alternatively, *highlightGain* is set to a fixed value (e.g. *highlightGain* = 2).

In step 623, a third control parameter corresponding to the width *midToneWidthAdjFactor* of the parabolic mid-section of the mapping function MF is deduced from *highlightGain* and *shadowGain* according to equations C. 58 to C.62 specified in clause C.3.2.4 of ETSI TS 103 433-1 v1.2.1, as it represents the middle portion of the tone mapping curve which shall be continuous with starting (characterized by *shadowGain*) and ending (characterized by *highlightGain*) portions of the curve (see clause C.3.2.4).

We have :

$$xp_1 = Clip3(0.2\,;0.5\,;\ 1.12 - bg\,)$$

$$xm = (vMaxOut - dg \times vMaxIn) \div Max(10^{-8}; bg - dg)$$

$$xp_2 = Min(2 \times xm\,;\ 2 \times (vMaxIn - xm\,))$$

$$midToneWidthAdjFactor = 2 \times xp \div vMaxIn$$

Eventually, the perceptually-uniform transformation is used during the automatic determination of tone mapping parameters clause C.3.2. It is normalized against the mastering display maximum luminance used to master the HDR content. Thus, the current automatic determination of the tone mapping curve parameters already takes into consideration peak luminance of the source material.

**Fig. 7** shows steps of an exemplary method for determining parameters controlling the piece-wise curve of a mapping function MF to be applied to an input image, in accordance with an embodiment of the invention.

In the following, the considered input image $I_{LMax}$ has a high dynamic range with a maximum luminance $L_{Max}$, which may be greater than a maximum reference luminance value $L_{Ref}$. For example, the input image may be beyond 1000 nits content then $L_{Max}$ is greater than 1000, for example equal to 5000, and $L_{Ref}$ is equal to 1000 nits.

In a variant, the maximum reference value $L_{Ref}$ depends on the content maximum luminance value $L_{Cont}$, which may differ from $L_{Ref}$ (e.g. if $L_{Ref}$ corresponds to the mastering display maximum luminance), for instance as follows:

$$L_{Ref} = (L_{cont} + a)/b$$

with as an example a = 8000 and b = 9.

In another variant, the maximum value $L_{Max}$ depends on the content maximum luminance value ($L_{Cont}$), which may differ from $L_{Max}$ (e.g. if $L_{Max}$ corresponds to the mastering display maximum luminance), for instance as follows:

$$L_{Max} = (L_{cont} + a)/b$$

with as an example a = 8000 and b = 9.

Another parametric model could be used (linear, polynomial, exponential, power...).

It should be noted that $L_{Max}$ may encompass the actual maximum luminance value of the input image content and the maximum luminance of the HDR mastering display used to grade the HDR material as well.

In the following we refer to a reference image $I_{LRef}$ of the same content as input image $I_{LMax}$, but with a high dynamic range of luminance/chrominance values bounded by $L_{Ref}$.

It is thus considered that the grading at two different maximum luminances (all other format parameters being equal) does not severely impact significantly the artistic intent except highlights (i.e. shadows and mid-tones management are consistent among both grades).

In a step 71, a characteristic parameter $IC_{LMax}$ of the input image, like for instance the previously described characteristic parameter avgMaxRGB$_{LMax}$ is computed.

Alternatively, the image characteristic parameter $IC_{LMax}$ of the input image may be set at the value of a parameter called Maximum Frame-Average Light Level (MaxFALL) or Maximum Content Light Level (MaxCLL) such as defined in annex P of CTA-861-G "A DTV Profile for Uncompressed High Speed Digital Interfaces", published in November 2016.

Alternatively, the characteristic parameter $IC_{LMax}$ may be set to another value representative of the average luminance of the content, computed as the geometric mean of the mastering display minimum luminance, mastering display maximum luminance and input HDR image average luminance values (that might be obtained by a content histogram analysis module such as already implemented in current TV image processing pipeline).

In a step 72, the maximum luminance value $L_{Max}$ of the input image is compared to $L_{Ref}$. If it is less than or equal to $L_{Rer}$ then step 74 of determining control parameters of the mapping function MF from the computed image characteristic parameter $IC_{LMax}$ = avgMaxRGB$_{LMax}$ is executed, in the same way as previously described in relation with **Fig. 6.** It should be noted that the invention is not limited to this exemplary case, provided that all the parameters of the set controlling the curve representing the tone mapping function, may be derived from this single image characteristic parameter.

Otherwise next step is step 73.

Step 73 comprises a conversion of the computed image characteristic $IC_{LMax}$ into a converted value $cIC_{LMax}$ configured to further determine in step 74 the same value of at least one control parameter of the mapping fonction for the input image as the one that would be determined for the reference image. In the exemplary case of the algorithm as specified in ETSI TS 103 433-1 v1.2.1 and as described in relation with **Fig. 6,** this parameter is the first parameter shadowGain controlling a slope SGC of the bottom linear section of the mapping curve in the perceptually uniform domain, as illustrated by **Fig. 4B.**

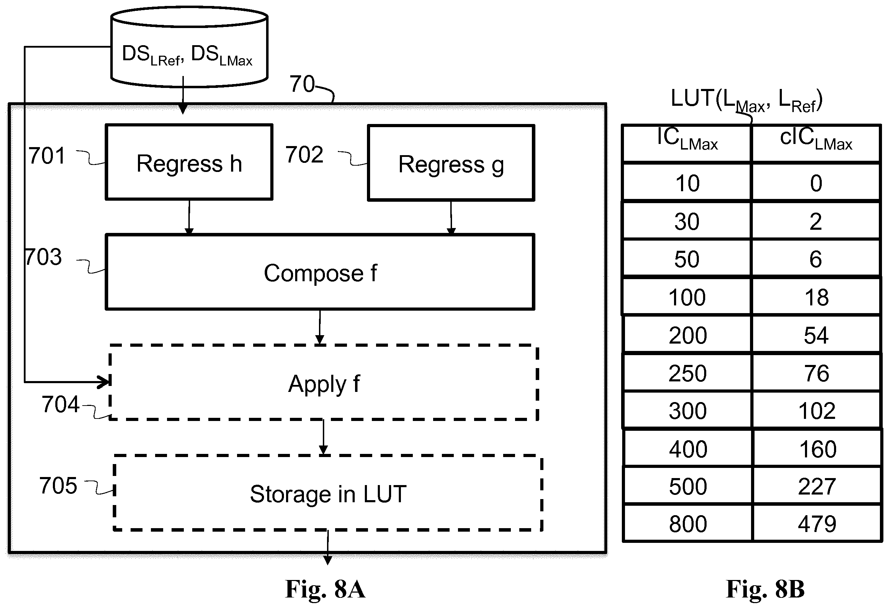

In an embodiment, this conversion 73 comprises the application of a conversion function f, which has been determined in a preliminary step 70. The determined conversion function f may be directly applied to the image characteristic parameter $IC_{LMax}$ of the input image or, as a variant, some representative values of converted image characteristics may be pre-computed and stored in a memory. This variant will be further detailed in relation with Fig. **8A** and **8B**. A converted image characteristic parameter $cIC_{Lmax}$, for example rAvgMaxRGB$_{LMax}$, is obtained.

In step 74, a set of parameters $CP_{LMax}$ controlling the mapping function MF are determined from the converted image characteristic parameter $cIC_{LMex}$.

An embodiment of preliminary step 70 will now be detailed in relation with **Fig. 8A.** In the following, we consider a a reference data set $DS_{LRef}$ comprising a plurality of reference images $IL_{Ref}$ having a high dynamic range bounded by $L_{Ref}$.

Pictures are selected so that they cover different possibilities of the HDR spectrum and its rendition (e.g. dark content, dark content with specular only, globally bright content with few dark areas, content with skin tones, sport content, movie content...). For example, the data set comprises 50 to 100 single pictures of various types of content and 50 to 100 video sequences comprising each 1000 or more frames.

We further consider at least one data set $DS_{LMax}$ comprising the corresponding images $I_{LMax}$ of the same contents having a high dynamic range bounded by the maximum luminance value $L_{Max}$ Advantageously, a data set $DS_{LMax}$ is available for each various values of $L_{Max}$, like for instance among the following values of 2000, 3000, 4000, 5000 and 10000 nits.

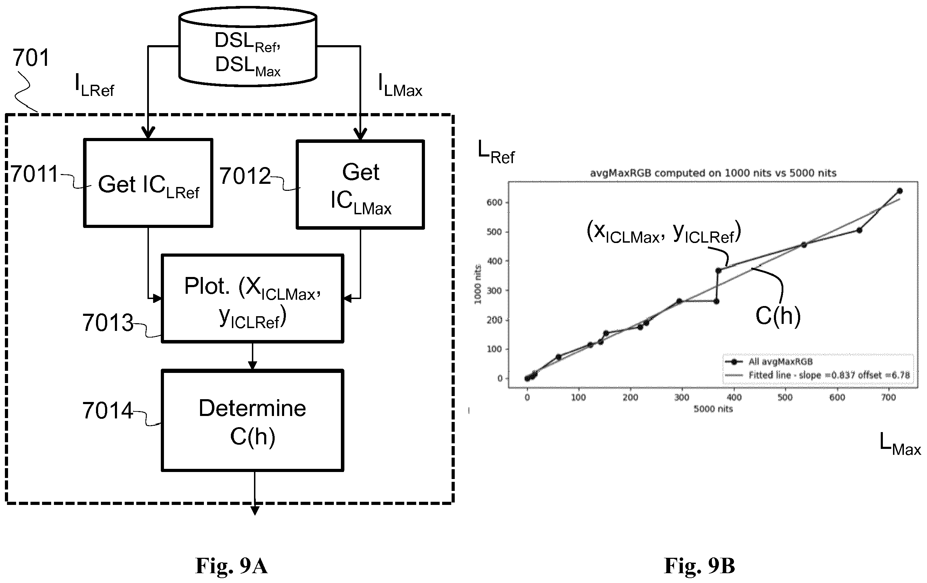

In a sub-step 701, a first conversion function h for converting an image characteristic parameter $IC_{LMax}$ of an image $I_{LMax}$ into a reference image characteristic parameter $IC_{LRef}$ is regressed from said data set $DS_{LMax}$ and $DS_{LRef}$. An embodiment of this step will be detailed below in relation to **Fig. 9A**.

In a sub-step 702, a second conversion function g for converting the reference image characteristic $IC_{LRef}$ into a converted image characteristic parameter $cIC_{LMax}$ configured to set the first control parameter of the mapping function to the value determined for the reference image characteristic $IC_{LRef}$, is regressed from said control parameters.

In a step 703, the conversion function f is determined by composing the first and the second conversion function in the following way :

$$f = g°h$$

In an optional step 704, the conversion function f is applied to image characteristics $IC_{LMax}$ computed from the data set $DS_{LMax}$. Precomputed values of converted image characteristics $cIC_{LRef}$ are obtained and stored in an optional step 704 as an entry of a Look-Up-Table $LUT(L_{Max}, L_{Ref})$, an entry comprising a converted image characteristic associated with the originating image characteristic $IC_{LMex}$.

An example of such a (1D) LUT is illustrated by **Fig. 8B.** This LUT provides conversion values for peak luminance material with $L_{Max}$ = 5000 nits and is stored in a memory of a device or sytem implementing the disclosed method. It should be noted that there is one LUT per couple of dual-graded images. For example, the memory may further comprise a specific LUT for conversion of each type of graded content material among LMax = 2000, 3000, 4000, 5000 and 10000 nits.

Fig. 9A details the regression 701 of the first conversion function h according to an embodiment of the method.

In a sub-step 7011 an image characteristic parameter $IC_{LRef}$ is obtained, for example by reading a memory, or computed for a plurality of images of data set $DS_{LRef}$.

In a sub-step 7012 a ground truth image characteristic parameter $IC_{LMax}$ is obtained, for example by reading a memory, or computed for a plurality of images of data set $DS_{LMax}$.

These values of image characteristic parameters form a matching pair. In a sub-step 7013, points corresponding to these matching pairs, having an x-coordinate set to $IC_{LMax}$ and a y-coordinate set to $IC_{LRef}$ are plotted.

As shown by the example of fitting curve of **Fig. 9B,** the plotted points may be approximated by a fitted line C(h) representing a linear function h. In a sub-step 7014, least squares methods are particularly efficient to permit identifying parameters (slope and offset) representative of such a curve $h:y = ax + b$. In the illustrated example, a = 0.837 and b = 6.780. Consequently, a linear relation may be empirically established between ground truth reference $IC_{LRef}$ and beyond $L_{Ref}$ (i.e. $L_{Max}$) image characteristic parameters values $IC_{LMax}$ computed from (dual graded) $L_{Ref}$ = 1000 nits and beyond 1000 nits HDR material.

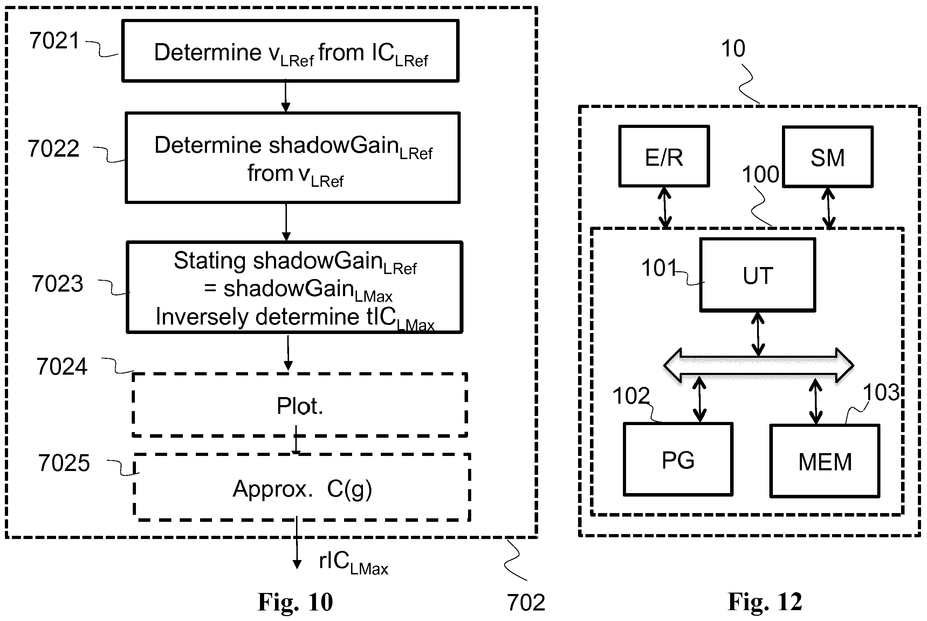

**Fig. 10** now details the determination step 702 of the second conversion function g according to an embodiment of the method. One can establish an analytical relationship between a reference image characteristic parameter $IC_{LRef}$ computed from a reference image $IL_{Ref}$ and a theoretically recomputed image characteristic parameter $tIC_{LMax}$ of the same content, that would be characterized by at least one of the same luminance mapping parameters (e.g. *shadowGain, midToneWitdhAdjFactor* and *highlightGain*) thanks to equations present in clause C.3.2. of ETSI TS 103 433-1 v1.2.1 (or equivalent equations present in the implementation of SL-HDR pre-processor).

In a sub-step 7021 a normalized version $v_{LRef}$ of the image characteristic parameter $IC_{LRef}$=avgMaxRGB$_{LRef}$ is obtained in a perceptually unifom domain normalized to $L_{Ref}$ as previously described in a relation to Fig. 6.

Indeed, equation (C.46) of ETSI TS 103 433-1 v1.2.1 gives:

$$v_{LRef} = v\left(\frac{avgMaxRGB_{LRef}}{LRef}; LRef\right)$$

with *v(x; y)* specified in equation (C.42) of ETSI TS 103 433-1 v1.2.1.

Then, a normalized version of the first control parameter $bg_{LRef}$ (representative of *shadowGain*) in the perceptually uniform domain normalized to $L_{Ref}$, may be computed as follows (an equivalent to equation (C.52) of ETSI TS 103 433-1 v1.2.1):

$$bg_{LRef} = nomGain_{LRef} \times \left(1 + Gfactor \times \left(1 - \frac{v_{LRef}}{LightnessHDRHigh}\right)\right)$$

with, as an example, *Gfactor* = 0.75, *LightnessHDRHigh* = 0.8

$$nomGain_{LRef} = v\left(\frac{100}{LRef}; LRef\right)$$

and (where 100 represents a typical SDR peak luminance).

Possibly, $bg_{LRef}$ is quantized and results in $shadowGain_{LRef}$ as follows (see (C.55) of ETSI TS 103 433-1 v1.2.1):

$$shadowGain_{LRef} = quantStep \times \left\lfloor \frac{4 \times \left(bg_{LRef} - 0.5\right)}{quantStep} + 0.5 \right\rfloor$$

where $\lfloor x \rfloor$ represented the rounding down function and as an example, $quantStep = \frac{2}{255}$ Then, in sub-step 7022, we state the following constraint :

$$shadowGain_{LMax} = shadowGain_{LRef}$$

Indeed, equations (C.23), (C.24), (C.27) of ETSI TS 103 433-1 v1.2.1 show that *SGC* slope of the *shadowGain* parameter in the perceptually-uniform domain -- is derived from the product of *exposure* by *expgain*. *Exposure* is linearly representative of *shadowGain* and *expgain* corresponds to a scaling factor dependent on the maximum luminance of the source material (i.e. dependent on the normalization factor of the perceptually-uniform domain). Thus, we want *exposure* (consequently *shadowGain*) to be the same for $L_{Ref}$ =1000 nits and $L_{Max}$ = non-1000 nits maximum luminance source material.

Eventually, we inversely (to the previous equations/steps) compute $bg_{LMax}$, $v_{LMax}$ and a theoretically recomputed version $tIC_{LMax}$ of the image characteristic parameter for $L_{Max}$ $tavgMaxRGB_{LMax}$ as follows:

$$bg_{LMax} = \frac{shadowGain_{LMax}}{4} + 0.5$$

$$v_{LMax} = -LightnessHDRHigh \times \left(\frac{\frac{bg_{LMax}}{nomGain_{LMax}} - 1}{Gfactor} - 1\right)$$

where

$$nomGain_{LMax} = v\left(\frac{100}{L_{Max}}; L_{Max}\right).$$

We thus have :

$$tavgMaxRGB_{LMax} = L_{Max} \times v^{-1}\left(v_{LMax}; L_{Max}\right)$$

where $v^{-1}(x;y)$ is the inverse function of $v(x;y)$.

Reinjecting previous equations in each other's provides the analytical solution for this section.

The obtained (non provided) formula gives an analytical relationship between the reference image characteristic $IC_{LRef}$ = avgMaxRGB$_{LRef}$ and the target image characteristic tICLMax=tavgMaxRGB$_{LMax}$, which defines the second conversion function g.

As this mathematical formula may be rather complex, it is proposed, in an embodiment, a numerical approach for pragmatically computing parameters of a predetermined fitting curve from said formula enabling a more implementation-friendly solution (i.e. characterized with a few parameters only). Some points with x-coordinate set to the reference image characteristic and y-coordinate set to the theoretical value given by the above formula are plotted in sub-step 7023 and a fitting curve C(g) in sub-step 7024 which approximates the conversion function g.

Analysis of the previous equations (of the analytical portion above) enables intuiting that a good example for the predetermined fitted curve is a function of the following form:

$$g: y = c.x^d + e$$

Parameters identification of such a model may be found using Levenberg-Marquardt algorithm applied to the Least Squares method.

Fitted curve and experimental data curve overlap gives evidence that the intuited model makes sense. In our example, c = 0.01, d = 1.60 and e = -1.48.

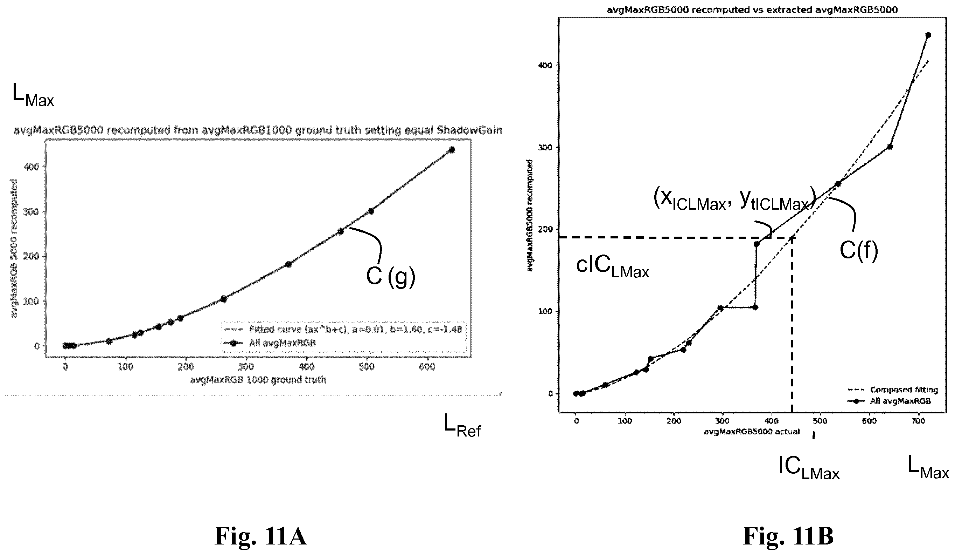

An example of fitting curve C(g) is shown in Fig. **11A.**

C(g) represents a good approximation of the second conversion function g, which provides a converted image characteristic parameter $cIC_{LMax}$ from a reference image characteristic $IC_{LRef}$.

The conversion function f is eventually composed in step 703, as follows:

$$f \approx g \circ h$$

$$f(x) \approx g\big(h(x)\big) = g(a.x + b) = c.(a.x + b)^d + e$$

It is noted that this function f is of the same form as g. This implies that f may be characterized by only 3 parameters rather than using 2 (h) + 3 (g) = 5. Result is clipped at 0 so that no negative values are generated.

As illustrated by **Fig. 11B,** the resulting composed fitted curve C(f) approximating f may be plotted against empirical values of $IC_{LMax}$ and $IC_{LRef}$ computed from images from datasets $DS_{LMax}$ and $DS_{LRef}$.

Referring to **Fig. 8B,** the determined model of conversion function f may be used to compute representative matching pairs of image characteristic parameters ($IC_{LMax}$, $cIC_{LMax}$) which may be stored as a 1D Look-Up-Table LUT($L_{Max}$, $L_{Ref}$).

Back to step 73 of **Fig. 7,** the conversion function f is applied to input image $I_{LMax}$, when $L_{Max}$ is greater than $L_{Ref}$.

Visual results demonstrate improvements especially for portion of pictures laying in the shadowGain and mid-tone area. Dark tone mapping issue is significantly improved. Highlights are also improved.

The method for determining control parameters for mapping, which has just been described in various embodiments, has been implemented and provides significant improvements over the state of the art.

Its advantages are at least threefold:

- Reuse of existing control parameters values determination algorithm already extensively proven for $L_{Ref}$ =1000 nits material ;
- Non-invasive change: current control parameters values determination algorithm is considered as a black box ;
- Simple implementation and complexity, as it can be implemented as 1D LUTs.

According to an embodiment of the method, a single-layer based distribution solution of **Fig. 2** or **3** is used, such as SL-HDR1 or SL-HDR2.

On **Figs. 1-4c, 5, 6, 7, 8A, 9A, 10** and **12** the modules are functional units. In various embodiments, all, some, or none of these functional units correspond to distinguishable physical units. For example, these modules or some of them may be brought together in a unique component or circuit or contribute to functionalities of a software. As another example, some modules may be composed of separate physical entities. Various embodiments are implemented using either pure hardware, for example using dedicated hardware such as an ASIC or an FPGA or VLSI, respectively « Application Specific Integrated Circuit », « Field-Programmable Gate Array », « Very Large Scale Integration », or from several integrated electronic components embedded in an apparatus, or from a blend of hardware and software components.

**Fig. 12** illustrates a block diagram of an example of a device 100 in which various aspects and embodiments of the method for determining control parameters for mapping as described in relation with Figs 7 to 11B are implemented.

In the example of **Fig. 12,** the device 100 includes at least one processor 101 configured to execute instructions loaded therein for implementing the method for determining control parameters for mapping, as previously described in various embodiments. Device 100 further comprises a memory 103 for storing a program code 102 to be loaded onto processor 101. This program performs the various aspects of the disclosed method for determining control parameters for mapping. This device 100 may be embodied in a device 10 configured to pre-process an input image/video and to encode, in the transmitted bitstream, an image/video and associated formatted metadata resulting of said pre-processing and conveying the determined control parameters of the mapping. Said pre-processor 10 may be included into the apparatus A1 of **Fig. 1.**

The pre-processor 10 at least comprises a transmission module E/R for receiving an input image and transmitting metadata resulting of the pre-processing and a storage module for storing any type of data needed for pre-processing or resulting from said pre-processing.

FIG. 5 illustrates a block diagram of an example of a system in which various aspects and embodiments are implemented. System 5000 can be embodied as a device including the various components described below and is configured to perform one or more of the aspects described in this application. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 5000, singly or in combination, can be embodied in a single integrated circuit, multiple ICs, and/or discrete components. For example, in at least one embodiment, the processing and encoder/decoder elements of system 5000 are distributed across multiple ICs and/or discrete components. In various embodiments, the system 5000 is communicatively coupled to other similar systems, or to other electronic devices, via, for example, a communications bus or through dedicated input and/or output ports. In various embodiments, the system 5000 is configured to implement one or more of the aspects described in this document.

The system 5000 includes at least one processor 5010 configured to execute instructions loaded therein for implementing, for example, the various aspects described in this document. Processor 5010 can include embedded memory, input output interface, and various other circuitries as known in the art. The system 5000 includes at least one memory 5020 (e.g., a volatile memory device, and/or a non-volatile memory device). System 5000 includes a storage device 5040, which can include non-volatile memory and/or volatile memory, including, but not limited to, EEPROM, ROM, PROM, RAM, DRAM, SRAM, flash, magnetic disk drive, and/or optical disk drive. The storage device 5040 can include an internal storage device, an attached storage device, and/or a network accessible storage device, as non-limiting examples.

System 5000 includes an encoder/decoder module 5030 configured, for example, to process data to provide an encoded video or decoded video, and the encoder/decoder module 5030 can include its own processor and memory. The encoder/decoder module 5030 represents module(s) that can be included in a device to perform the encoding and/or decoding functions. As is known, a device can include one or both of the encoding and decoding modules. Additionally, encoder/decoder module 5030 can be implemented as a separate element of system 5000 or can be incorporated within processor 5010 as a combination of hardware and software as known to those skilled in the art.

Program code to be loaded onto processor 5010 or encoder/decoder 5030 to perform the various aspects described in this document can be stored in storage device 5040 and subsequently loaded onto memory 5020 for execution by processor 5010. In accordance with various embodiments, one or more of processor 5010, memory 5020, storage device 5040, and encoder/decoder module 5030 can store one or more of various items during the performance of the processes described in this document. Such stored items can include, but are not limited to, the input video, the decoded video or portions of the decoded video, a bitstream, matrices, variables, and intermediate or final results from the processing of equations, formulas, operations, and operational logic.

In several embodiments, memory inside of the processor 5010 and/or the encoder/decoder module 5030 is used to store instructions and to provide working memory for processing that is needed during encoding or decoding.

In other embodiments, however, a memory external to the processing device (for example, the processing device can be either the processor 5010 or the encoder/decoder module 5030) is used for one or more of these functions. The external memory can be the memory 5020 and/or the storage device 5040, for example, a dynamic volatile memory and/or a non-volatile flash memory. In several embodiments, an external non-volatile flash memory is used to store the operating system of a television. In at least one embodiment, a fast external dynamic volatile memory such as a RAM is used as working memory for video coding and decoding operations, such as for MPEG-2, HEVC, or VVC (Versatile Video Coding).

The input to the elements of system 5000 can be provided through various input devices as indicated in block 5030. Such input devices include, but are not limited to, (i) an RF portion that receives an RF signal transmitted, for example, over the air by a broadcaster, (ii) a Composite input terminal, (iii) a USB input terminal, and/or (iv) an HDMI input terminal.

In various embodiments, the input devices of block 5030 have associated respective input processing elements as known in the art. For example, the RF portion can be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which can be referred to as a channel in certain embodiments, (iv) demodulating the down-converted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, down-converting the received signal to a lower frequency (for example, an intermediate frequency or a near-baseband frequency) or to baseband.

In one set-top box embodiment, the RF portion and its associated input processing element receives an RF signal transmitted over a wired (for example, cable) medium, and performs frequency selection by filtering, down-converting, and filtering again to a desired frequency band.

Various embodiments rearrange the order of the above-described (and other) elements, remove some of these elements, and/or add other elements performing similar or different functions.

Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 5000 to other electronic devices across USB and/or HDMI connections. It is to be understood that various aspects of input processing, for example, Reed-Solomon error correction, can be implemented, for example, within a separate input processing IC or within processor 5010 as necessary. Similarly, aspects of USB or HDMI interface processing can be implemented within separate interface ICs or within processor 5010 as necessary. The demodulated, error corrected, and demultiplexed stream is provided to various processing elements, including, for example, processor 5010, and encoder/decoder 5030 operating in combination with the memory and storage elements to process the data stream as necessary for presentation on an output device.

Various elements of system 5000 can be provided within an integrated housing. Within the integrated housing, the various elements can be interconnected and transmit data therebetween using suitable connection arrangement, for example, an internal bus as known in the art, including the 12C bus, wiring, and printed circuit boards.

The system 5000 includes communication interface 5050 that enables communication with other devices via communication channel 5060. The communication interface 5050 can include, but is not limited to, a transceiver configured to transmit and to receive data over communication channel 5060. The communication interface 5050 can include, but is not limited to, a modem or network card and the communication channel 5060 can be implemented, for example, within a wired and/or a wireless medium.

Data is streamed to the system 5000, in various embodiments, using a Wi-Fi network such as IEEE 802.11. The Wi-Fi signal of these embodiments is received over the communications channel 5060 and the communications interface 5050 which are adapted for Wi-Fi communications. The communications channel 5060 of these embodiments is typically connected to an access point or router that provides access to outside networks including the Internet for allowing streaming applications and other over-the-top communications.

Other embodiments provide streamed data to the system 5000 using a set-top box that delivers the data over the HDMI connection of the input block 5030.

Still other embodiments provide streamed data to the system 5000 using the RF connection of the input block 5030.

It is to be appreciated that signaling can be accomplished in a variety of ways. For example, one or more syntax elements, flags, and so forth are used to signal information to a corresponding decoder in various embodiments.

The system 5000 can provide an output signal to various output devices, including a display 5100, speakers 5110, and other peripheral devices 5120. The other peripheral devices 5120 include, in various examples of embodiments, one or more of a stand-alone DVR, a disk player, a stereo system, a lighting system, and other devices that provide a function based on the output of the system 5000.

In various embodiments, control signals are communicated between the system 5000 and the display 5100, speakers 5110, or other peripheral devices 5120 using signaling such as AV.Link, CEC, or other communications protocols that enable device-to-device control with or without user intervention.

The output devices can be communicatively coupled to system 5000 via dedicated connections through respective interfaces 5070, 5080, and 5090.

Alternatively, the output devices can be connected to system 5000 using the communications channel 5060 via the communications interface 5050. The display 5100 and speakers 5110 can be integrated in a single unit with the other components of system 5000 in an electronic device such as, for example, a television.

In various embodiments, the display interface 5070 includes a display driver, such as, for example, a timing controller (T Con) chip.

The display 5100 and speaker 5110 can alternatively be separate from one or more of the other components, for example, if the RF portion of input 5130 is part of a separate set-top box. In various embodiments in which the display 5100 and speakers 5110 are external components, the output signal can be provided via dedicated output connections, including, for example, HDMI ports, USB ports, or COMP outputs.

Implementations of the various processes and features described herein may be embodied in a variety of different equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, any other device for processing an image or a video, and any other communication apparatus. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage media, is merely an illustrative and not exhaustive listing as is readily appreciated by one of ordinary skill in the art: a portable computer; a floppy disk; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium (also referred to as a computer readable medium or a computer readable storage medium). Instructions may be, for example, in hardware, firmware, software, or a combination. Instructions may be found in, for example, an operating system, a separate application, or a combination of the two. A processor may be characterized, therefore, as, for example, both an apparatus configured to carry out a process and an apparatus that includes a processor-readable medium (such as a storage apparatus) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described example , or to carry as data the actual syntax-values written by a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for determining control parameters for mapping an input image ($I_{LMax}$) of a content, said image comprising pixels having luminance values represented with a high dynamic range bounded by a maximum luminance value ($L_{Max}$) to an image of the same content, said image comprising pixels having luminance values represented with a lower dynamic range, said method comprising :

   - the computation (71) of an image characteristic parameter ($IC_{LMax}$) of the input image;
   - the determination (74) of said control parameters:

      ◦ from said image characteristic ($IC_{LMax}$), if said input image has a maximum luminance value ($L_{Max}$) less or equal than a maximum reference luminance value ($L_{Ref}$);
      ◦ otherwise, from a converted image characteristic ($cIC_{LMax}$), said converted image characteristic being configured to set at least one of said control parameters at a value that the determination step would have determined for a reference image ($I_{LRef}$) of the same content, said reference image having intensities represented with a high dynamic range bounded by said maximum reference luminance ($L_{Ref}$).

2. A method according to claim 1, wherein said image characteristic ($IC_{LMax}$) is an average maximal luminance value (AvgMaxRGB$_{LMax}$) of the input image.

3. A method according to any of claims 1 to 2, wherein, said control parameters determining a mapping function as a piece-wise luminance mapping curve in a perceptually uniform domain normalized to a maximum luminance value (I$_{LMax}$) and comprising a first parameter (shadowGain$_{LMax}$) controlling a slope of said bottom linear section of the curve, a second parameter controlling a slope of an upper linear section of said curve, and a third parameter controlling a width of a parabolic mid-section connecting the bottom linear section to the upper linear section, said at least one control parameter is said first parameter (shadowGain$_{LMax}$).

4. A method according to any of claims 1 to 3, comprising a preliminary step (70) comprising a regression (701) of a conversion function (f) of said image characteristic (IC$_{LMax}$) into said converted image characteristic (cIC$_{LMax}$), said regressed conversion function being used to convert said image characteristic (IC$_{LMax}$) into said converted image characteristic (cIC$_{LMax}$).

5. A method according to claim 4, wherein said preliminary step further comprises the application of said conversion function (f) to a plurality of computed image characteristic parameters from a data set (DS$_{LMax}$) of images having a high dynamic range bounded by said maximum luminance value (I$_{LMax}$) and the storage of the plurality of converted image characteristic parameters as a pluralities of entries of a look-up-table, an entry comprising an association of a value of a computed image characteristic (IC$_{LMax}$) with the converted image characteristic (cICL$_{Max}$).

6. A method according to any of claims 4 and 5, wherein said preliminary step comprises a sub-step (701) of regressing a first conversion function (h) of said said image characteristic (IC$_{LMax}$) into a reference image characteristic (ICL$_{Ref}$) of an image of the same content having a high dynamic range bounded by said said maximum reference luminance value (L$_{Ref}$) and a sub-step (702) of regressing a second conversion function (g) of said reference image characteristic into said converted image characteristic cIC$_{LMax}$) and a composition (703) of said first and second conversion functions into said conversion function (f).

7. A method according to claim 6, wherein said regression of a first conversion function (h) comprises the computation (7011, 7012) of a plurality of values of image characteristics (IC$_{LRef}$, IC$_{LMax}$) from a dataset (DSL$_{Max}$, DSL$_{Ref}$) comprising a plurality of pairs of images of a same content, a first image of a pair comprising pixels having luminance values represented with a high dynamic range greater than said maximum reference luminance value (L$_{Ref}$) and a second image of the pair comprising pixels having luminance values represented with a high dynamic range bounded by said maximum reference luminance value (L$_{Ref}$), the plotting (7013) of a plurality of points corresponding to the computed pairs of image characteristics and the determination (7014) of control parameters of a curve (C(h)) fitting said points and representing said first conversion function (h).

8. A method according to claim 3 and any of claims 4 to 7, wherein said regression of a second conversion function (g) comprises the determination (7021) of a normalized version of the reference image characteristic parameter (v$_{LRef}$) in a perceptually unifom domain normalized to the maximum reference luminance value (L$_{Ref}$) as a function of the first reference characteristic parameter (IC$_{LRef}$), the determination (7022) of the first reference parameter (bg$_{LRef}$) as a function of said normalized reference image characteristic (v$_{LRef}$) in said perceptually-uniform domain normalized to said maximum reference luminance value and, stating equality of said first reference parameter (IC$_{LRef}$) with said first parameter (IC$_{LMax}$), the reversion (7023) of a theoretical image characteristic (tIC$_{LMax}$) in a perceptually uniform domain normalized to said maximum luminance value (L$_{Max}$) as a function of said reference image characteristic (ICL$_{Ref}$).

9. A method according to claim 8, wherein said regression (702) further comprises the plotting (7024) of a plurality of points corresponding to pairs of values of said reference image characteristic (ICL$_{Ref}$) and said theoretical image characteristic (tIC$_{LMax}$) and the determination (7025) of control parameters of a curve (C(g)) fitting said points and representing said second conversion function (g).

10. A method according to any of claims 6 to 9, wherein said first conversion function (h) is a linear function and said second conversion function (g) is a parabolic function.

11. A method according to any of claims 4 to 10, wherein, in said determination step said converted image characteristic is obtained by applying (73) said conversion function (f).

12. A method according to any of claims 1 to 9, wherein said determination step comprises the reading of said converted image characteristic (cIC$_{LMax}$) in a Look-Up-Table (LUT(L$_{Max}$, L$_{Ref}$)), said look-up table comprising a plurality of entries, an entry comprising an association of a value of a computed image characteristic (ICL$_{Max,LUT}$) with the converted image characteristic (cICL$_{Max}$).

13. A device (100) for determining control parameters for mapping an input image (I$_{LMax}$) of a content, said image comprising pixels having luminance values represented with a high dynamic range bounded by a maximum luminance value (L$_{Max}$) to an image of the same content, said image comprising pixels having luminance values represented with a lower dynamic range, said device comprising a processor (101) configured to :

- compute an image characteristic (IC$_{LMax}$) of the input image;
- determine said control parameters:

o from said image characteristic, if said input image has a maximum luminance value (L$_{Max}$) less or equal than a maximum reference luminance value (L$_{Ref}$);

∘ otherwise, from a converted image characteristic, said converted image characteristic being configured to set at least one of said control parameters at a value that the determination step would have determined for an image (I$_{LRef}$) of the same content, said image having intensities represented with a high dynamic range bounded by said maximum reference luminance (L$_{Ref}$).

14. A system (5000) comprising the device (100) of claim 13.

15. A computer program product, comprising program code instructions for the implementation of the method according to any of claims 1 to 12, when said program is executed by a processor.

16. A processor readable medium having stored therein instructions for causing a processor to perform the method according to any of claims 1 to 12.

EP 3 671 626 A1

A1

NET

A2

A3

**Fig. 1**

5000

Processor 5010

Memory 5020

Display Interface 5070

Display 5100

RF, COMP, USB, HDMI 5130

5140

Audio Interface 5080

Speakers 5110

Encoder/ Decoder 5030

Storage Device 5040

Peripheral Interface 5090

Peripherals 5120

Communications Interface 5050

Communication channel 5060

**Fig. 5**

**Fig. 2**

**Fig. 3**

EP 3 671 626 A1

**Fig. 4a**

Fig. 4b

**Fig. 4c**

EP 3 671 626 A1

EP 3 671 626 A1

**Fig. 6**

61 — Compute IC

62

621 — Det. shadowGain

622 — Det. highlightGain

623 — Det. MidToneWidthAdjFactor

**Fig. 7**

$I_{LMax}$

71 — Compute $IC_{LMax}$

72 — $L_{Max} > L_{Ref}$ ?   n

70 — Regress. f   →   f

73 — Convert $IC_{LMax}$ ⟹ $cIC_{LMax}$   y

74 — Determine $CP_{LMax}$

LUT($L_{Max}$, $L_{Ref}$)

| $IC_{LMax}$ | $cIC_{LMax}$ |
|---|---|
| 10 | 0 |
| 30 | 2 |
| 50 | 6 |
| 100 | 18 |
| 200 | 54 |
| 250 | 76 |
| 300 | 102 |
| 400 | 160 |
| 500 | 227 |
| 800 | 479 |

**Fig. 8B**

$DS_{LRef}$, $DS_{LMax}$

70

701 — Regress h

702 — Regress g

703 — Compose f

704 — Apply f

705 — Storage in LUT

**Fig. 8A**

**Fig. 9A**

**Fig. 9B**

**7021** — Determine $v_{LRef}$ from $IC_{LRef}$

**7022** — Determine shadowGain$_{LRef}$ from $v_{LRef}$

**7023** — Stating shadowGain$_{LRef}$ = shadowGain$_{LMax}$ Inversely determine $tIC_{LMax}$

**7024** — Plot.

**7025** — Approx. C(g)

$rIC_{LMax}$

**Fig. 10**                 **702**

E/R            SM

**100**

**101** — UT

**102**            **103**

PG            MEM

**10**

**Fig. 12**

Fig. 11A

Fig. 11B

EP 3 671 626 A1

Europäisches
Patentamt

European
Patent Office

Office européen
des brevets

# EUROPEAN SEARCH REPORT

**Application Number**

EP 18 21 3909

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Etsi: "High-Performance Single Layer High Dynamic Range (HDR) System for use in Consumer Electronics devices; Part 2: Enhancements for Perceptual Quantization (PQ) transfer function based High Dynamic Range (HDR) Systems (SL-HDR2)", <br> , <br> 31 January 2018 (2018-01-31), pages 2018-1, XP055497360, <br> Retrieved from the Internet: <br> URL:https://www.etsi.org/deliver/etsi_ts/1 03400_103499/10343302/01.01.01_60/ts_I0343 302v010101p.pdf <br> [retrieved on 2018-08-03] <br> * Section 7.3 * <br> ----- | 1-16 | INV. <br> G06T5/00 <br> H04N5/232 <br> H04N19/186 |
| A | Etsi: "High-Performance Single Layer High Dynamic Range (HDR) System for use in Consumer Electronics devices; Part 1: Directly Standard Dynamic Range (SDR) Compatible HDR System (SL-HDR1)", <br> , <br> 1 August 2017 (2017-08-01), XP55466018, <br> Retrieved from the Internet: <br> URL:http://www.etsi.org/deliver/etsi_ts/10 3400_103499/10343301/01.02.01_60/ts_I03433 01v010201p.pdf <br> [retrieved on 2018-04-10] <br> * Section E.1, E.2 * <br> ----- <br> -/-- | 1-16 | **TECHNICAL FIELDS SEARCHED (IPC)** <br><br> G06T <br> H04N |

The present search report has been drawn up for all claims

| Place of search | Date of completion of the search | Examiner |
|---|---|---|
| Munich | 20 May 2019 | Katsoulas, Dimitrios |

page 1 of 2

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LASSERRE S ET AL: "Single-layer HDR video coding with SDR backward compatibility", PROCEEDINGS OF SPIE; [PROCEEDINGS OF SPIE ISSN 0277-786X VOLUME 10524], SPIE, US, vol. 9971, 27 September 2016 (2016-09-27), pages 997108-997108, XP060078007, DOI: 10.1117/12.2235741 ISBN: 978-1-5106-1533-5 * abstract * * page 5 - page 6 * ----- | 1-16 | |

TECHNICAL FIELDS
SEARCHED      (IPC)

The present search report has been drawn up for all claims

| Place of search | Date of completion of the search | Examiner |
|---|---|---|
| Munich | 20 May 2019 | Katsoulas, Dimitrios |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DIAZ, R. ; BLINSTEIN, S. ; QU, S.** Integrating HEVC Video Compression with a High Dynamic Range Video Pipeline. *SMPTE Motion Imaging Journal,* February 2016, vol. 125 (1.), 14-21

- *ETSI technical specification TS 103 433-1 V1.2.1,* August 2017
- *ETSI technical specification TS 103 433-2 V1.1.1,* January 2018